# EUROPEAN PATENT APPLICATION

(11) **EP 4 686 259 A1**
(43) Date of publication of application: **28.01.2026**
(21) Application number: 24787890.3
(22) Date of filing: 21.03.2024
(51) Int. Cl.: H04W 36/00

(54) **COMMUNICATION METHOD AND APPARATUS**

(30) Priority: 10.04.2023 CN 202310430234
(71) Applicant: Huawei Technologies Co., Ltd., Shenzhen, Guangdong 518129 (CN)
(72) Inventor: GE, Cuili, Shenzhen, Guangdong 518129 (CN)
(74) Representative: Thun, Clemens
(86) International application number: PCT/CN2024/083138
(87) International publication number: WO 2024/212784

(57) **Abstract**

This application provides a communication method and apparatus, relating to the field of communication technologies. In the method, when update of an MBS service area of a service for which a multicast/broadcast session has been established to a first service area fails, an MBS device can also trigger continuation of establishing a multicast/broadcast session for the service, allowing a subsequently established multicast/broadcast session to provide the service for the first service area. In this way, continuity of the service can still be ensured when the update of the MBS service area fails.

## Description

This application claims priority to Chinese Patent Application No. 202310430234.9, filed with the China National Intellectual Property Administration on April 10, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a 5th generation (5th generation, 5G) mobile communication system, 5G multicast/broadcast (multicast/broadcast) is defined as an enhancement over 5G unicast, designated to establish multicast/broadcast service (multicast and broadcast service, MBS) sessions for MBSs, thereby providing multicast/broadcast services for MBS service areas (MBS service area). As service requirements of the MBS change, the MBS service areas may be updated, necessitating synchronous adjustments to service areas of the MBS sessions, to maintain the services.

However, updating of an MBS service area for an MBS for which a multicast/broadcast session has been established may fail, and how to ensure service continuity in the event of failure is currently a hot topic in research.

### SUMMARY

Embodiments of this application provide a communication method and apparatus, to still continue to ensure a service when update of an MBS service area fails.

To achieve the foregoing objective, the following technical solutions are used in this application.

According to a first aspect, a communication method is provided. The method includes: A multicast/broadcast service MBS device sends first information to a first multicast/broadcast session management network element, and receives second information from the first multicast/broadcast session management network element, to send third information based on the second information. The first information is for requesting to update an MBS service area to a first service area, and the MBS service area is a service area of a service. The second information indicates that update of the MBS service area fails. The third information includes information about the first service area, and the third information is for triggering establishing a multicast/broadcast session for the service.

It can be learned from the method according to the first aspect that, when an MBS service area of a service for which a multicast/broadcast session has been established fails to be updated to the first service area, the MBS device may further trigger continuation of establishing a multicast/broadcast session for the service, so that a subsequently established multicast/broadcast session can provide the service for the first service area. In this way, the service can still continue to be ensured when update of the MBS service area fails.

In a possible design solution, the MBS device is a network resource management entity, and the sending the third information includes: The network resource management entity sends the third information to a network capability exposure function network element.

Optionally, the method according to the first aspect may further include: The network resource management entity receives fourth information from the network capability exposure function network element, where the fourth information indicates that establishment of the multicast/broadcast session succeeds.

It may be understood that, a procedure of establishing the multicast/broadcast session may be directly triggered by the network resource management entity. Compared with direct triggering by an application layer service entity, direct triggering by the network resource management entity may reduce interaction between the network resource management entity and the application layer service entity, to reduce communication overheads and improve communication efficiency.

Further, the third information is a multicast/broadcast session create request message, and the fourth information is a multicast/broadcast session create response message. That is, an existing message is reused for implementation to reduce implementation difficulty, or a newly defined message may be used. This is not specifically limited.

Optionally, the method according to the first aspect may further include: The network resource management entity sends information about the multicast/broadcast session to terminals in the first service area, so that these terminals can join a multicast group of the multicast/broadcast session, or receive broadcast of the multicast/broadcast session.

Optionally, the method according to the first aspect may further include: The network resource management entity sends an ingress address of the multicast/broadcast session to an application layer service entity, where the ingress address is for receiving data of the service, to ensure that the application layer service entity can accurately send the data of the service to the multicast/broadcast session.

Further, the ingress address is carried in a multicast/broadcast session update response message. That is, an existing message is reused for implementation to reduce implementation difficulty, or a newly defined message may be used. This is not specifically limited.

Optionally, the method according to the first aspect may further include: The network resource management entity sends fifth information to the application layer service entity, where the fifth information indicates the application layer service entity to send the data of the service via the multicast/broadcast session, to continue to ensure the service.

Further, the fifth information is a user plane delivery mode switching message. That is, an existing message is reused for implementation to reduce implementation difficulty, or a newly defined message may be used. This is not specifically limited.

Optionally, the method according to the first aspect may further include: The network resource management entity sends the ingress address of the multicast/broadcast session to a data delivery enabling service entity, where the ingress address is for receiving the data of the service, to ensure that the data delivery enabling service entity can accurately send the data of the service to the multicast/broadcast session.

In another possible design solution, the MBS device is a network capability exposure function network element, and the sending the third information includes: The network capability exposure function network element sends the third information to a second multicast/broadcast session management network element, where the third information is for requesting to establish the multicast/broadcast session, and there is an intersection set between a service area of the second multicast/broadcast session management network element and the first service area.

Optionally, the method according to the first aspect may further include: The network capability exposure function network element discovers the second multicast/broadcast session management network element from a network repository function network element based on the information about the first service area.

Optionally, the method according to the first aspect may further include: The network capability exposure function network element receives fourth information from the second multicast/broadcast session management network element, where the fourth information indicates that establishment of the multicast/broadcast session succeeds.

There may be one second multicast/broadcast session management network element, and a service area of the single second multicast/broadcast session management network element can completely cover the first service area. Alternatively, there may be a plurality of second multicast/broadcast session management network elements, and a union set of service areas of the plurality of second multicast/broadcast session management network elements can also completely cover the first service area. In other words, the network capability exposure function network element needs to first determine, based on the information about the first service area, a second multicast/broadcast session management network element that can provide a multicast/broadcast service for the first service area, and then trigger establishing the multicast/broadcast session, to ensure that the multicast/broadcast session for the first service area can be successfully established, so that the service can still continue to be ensured when update of the MBS service area fails.

Further, the third information is a multicast/broadcast session create request message, and the fourth information is a multicast/broadcast session create response message. That is, an existing message is reused for implementation to reduce implementation difficulty, or a newly defined message may be used. This is not specifically limited.

Optionally, the method according to the first aspect may further include: The network capability exposure function network element sends an ingress address of the multicast/broadcast session to an application network element, where the ingress address is for receiving data of the multicast/broadcast session, to ensure that the application network element can accurately send data of the service to the multicast/broadcast session.

Further, the ingress address is carried in the multicast/broadcast session create response message. That is, an existing message is reused for implementation to reduce implementation difficulty, or a newly defined message may be used. This is not specifically limited.

In still another possible design solution, the MBS device is the network resource management entity, and the method according to the first aspect may further include: The network resource management entity receives sixth information from the network capability exposure function network element, and sends seventh information to an application layer service entity based on the sixth information. The sixth information indicates that establishment of the multicast/broadcast session fails. The seventh information is for triggering establishing a unicast session for the service.

Optionally, the seventh information further indicates that a network covering the first service area does not support multicast/broadcast.

In other words, if the establishment of the multicast/broadcast session for the first service area still fails, it indicates that the network covering the first service area may not support the multicast/broadcast. Therefore, the network resource management entity may trigger the application layer service entity to establish the unicast session for the first service area, to ensure that a terminal in the first service area can still obtain the service.

Further, the third information is a multicast/broadcast session create request message, the sixth information is a multicast/broadcast session create response message, and the seventh information is a multicast/broadcast event notification message or a user plane delivery mode switching message. That is, an existing message is reused for implementation to reduce implementation difficulty, or a newly defined message may be used. This is not specifically limited.

In a possible design solution, the first information is a multicast/broadcast session update request message, and the second information is the multicast/broadcast session update response message. That is, an existing message is reused for implementation to reduce implementation difficulty, or a newly defined message may be used. This is not specifically limited.

In a possible design solution, a second service area and the first service area satisfy any one of the following relationships: The second service area partially overlaps the first service area, the second service area does not overlap the first service area, or the first service area includes the second service area. The relationships may be specifically flexibly selected based on an actual situation. This is not specifically limited.

According to a second aspect, a communication method is provided. The method includes: A network capability exposure function network element sends first information to a first multicast/broadcast session management network element, and receives second information from the first multicast/broadcast session management network element, where the first information is for requesting to update a multicast/broadcast service MBS service area to a first service area, and the first service area is a service area of a service; and the second information indicates that update of the MBS service area fails. In this way, the network capability exposure function network element sends information about the first service area to a network repository function network element, and receives third information from the network repository function network element, to send fourth information to an application network element. The information about the first service area is for discovering a multicast/broadcast session management network element that matches the first service area, the third information indicates that a multicast/broadcast session management network element that matches the first service area is not found, and the fourth information is for triggering establishing a unicast session for the service.

It can be learned from the method according to the second aspect that, when an MBS service area of a service for which a multicast/broadcast session has been established fails to be updated to the first service area, an MBS device may further trigger continuation of establishing a multicast/broadcast session for the service. If continuation of establishing the multicast/broadcast session for the service still fails, it indicates that a network covering the first service area does not support multicast/broadcast, and the unicast session needs to be established, to continue to ensure the service.

In a possible design solution, the first information is a multicast/broadcast session update request message, the second information is a multicast/broadcast session update response message, the third information is a network element discovery response message, and the fourth information is a multicast/broadcast session update response message or a multicast/broadcast event notification message.

In a possible design solution, a second service area and the first service area satisfy any one of the following relationships: The second service area partially overlaps the first service area, the second service area does not overlap the first service area, or the first service area includes the second service area.

In addition, for technical effects of the communication method according to the second aspect, refer to technical effects of the method according to the first aspect. Details are not described herein again.

According to a third aspect, a communication apparatus is provided. The communication apparatus includes modules configured to perform the method according to the first aspect, such as a transceiver module and a processing module. For example, the transceiver module is configured to perform sending and receiving functions of the communication apparatus, and the processing module is configured to perform a function of the communication apparatus other than the sending and receiving functions.

Optionally, the transceiver module may include a sending module and a receiving module. The sending module is configured to implement the sending function of the communication apparatus according to the third aspect, and the receiving module is configured to implement the receiving function of the communication apparatus according to the third aspect.

Optionally, the communication apparatus according to the third aspect may further include a storage module. The storage module stores a program or instructions. When the processing module executes the program or the instructions, the communication apparatus is caused to perform the method according to the first aspect.

It may be understood that, the communication apparatus according to the third aspect may be a network device, a chip (system) or another part or component that may be disposed in the network device, or an apparatus including the network device. This is not limited in this application.

In addition, for technical effects of the communication apparatus according to the third aspect, refer to the technical effects of the method according to the first aspect. Details are not described herein again.

According to a fourth aspect, a communication apparatus is provided. The communication apparatus includes modules configured to perform the method according to the second aspect, such as a transceiver module and a processing module. For example, the transceiver module is configured to perform sending and receiving functions of the communication apparatus, and the processing module is configured to perform a function of the communication apparatus other than the sending and receiving functions.

Optionally, the transceiver module may include a sending module and a receiving module. The sending module is configured to implement the sending function of the communication apparatus according to the fourth aspect, and the receiving module is configured to implement the receiving function of the communication apparatus according to the fourth aspect.

Optionally, the communication apparatus according to the fourth aspect may further include a storage module. The storage module stores a program or instructions. When the processing module executes the program or the instructions, the communication apparatus is caused to perform the method according to the second aspect.

It may be understood that, the communication apparatus according to the fourth aspect may be a network device, a chip (system) or another part or component that may be disposed in the network device, or an apparatus including the network device. This is not limited in this application.

In addition, for technical effects of the communication apparatus according to the fourth aspect, refer to the technical effects of the method according to the second aspect. Details are not described herein again.

According to a fifth aspect, a communication apparatus is provided. The communication apparatus includes a processor. The processor is configured to perform the method according to any one of possible implementations of the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory may be integrated with the processor, or may be disposed separately from the processor. The memory may be configured to store a computer program and/or data related to the method according to either of the first aspect or the second aspect.

In embodiments of this application, the communication apparatus according to the fifth aspect may be the network device according to either of the first aspect or the second aspect, a chip (system) or another part or component that may be disposed in the network device, or an apparatus including the network device.

In addition, for technical effects of the communication apparatus according to the fifth aspect, refer to the technical effects of the method according to any one of implementations of the first aspect or the second aspect. Details are not described herein again.

According to a sixth aspect, a communication apparatus is provided. The communication apparatus includes a processor. The processor is coupled to a memory, and the processor is configured to execute a computer program stored in the memory, to cause the communication apparatus to perform the method according to any one of possible implementations of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In embodiments of this application, the communication apparatus according to the sixth aspect may be the network device according to either of the first aspect or the second aspect, a chip (system) or another part or component that may be disposed in the network device, or an apparatus including the network device.

In addition, for technical effects of the communication apparatus according to the sixth aspect, refer to the technical effects of the method according to any one of implementations of the first aspect or the second aspect. Details are not described herein again.

According to a seventh aspect, a communication apparatus is provided, and includes a processor and a memory. The memory is configured to store a computer program. When the processor executes the computer program, the communication apparatus is caused to perform the method according to any one of implementations of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be the network device according to either of the first aspect or the second aspect, a chip (system) or another part or component that may be disposed in the network device, or an apparatus including the network device.

In addition, for technical effects of the communication apparatus according to the seventh aspect, refer to the technical effects of the method according to any one of implementations of the first aspect or the second aspect. Details are not described herein again.

According to an eighth aspect, a computer-readable storage medium is provided, and includes a computer program or instructions. When the computer program or the instructions are run on a computer, the computer is caused to perform the method according to any one of possible implementations of the first aspect or the second aspect.

According to a ninth aspect, a computer program product is provided, and includes a computer program or instructions. When the computer program or the instructions are run on a computer, the computer is caused to perform the method according to any one of possible implementations of the first aspect or the second aspect.

### BRIEF DESCRIPTION OF DRAWINGS

FIG. 1 is a diagram of an architecture of a 5G mobile communication system;
FIG. 2 is a diagram of an MBS architecture;
FIG. 3 is a diagram of an architecture of a SEAL;
FIG. 4 is a diagram 1 of an architecture of SEALDD;
FIG. 5 is a diagram 2 of an architecture of SEALDD;
FIG. 6 is a schematic flowchart of update of an MBS service area;
FIG. 7 is a diagram 1 of distribution of an MBS service area;
FIG. 8 is a diagram of an architecture of a communication system according to an embodiment of this application;
FIG. 9 is a schematic flowchart 1 of a communication method according to an embodiment of this application;
FIG. 10 is a diagram 2 of distribution of an MBS service area;
FIG. 11 is a schematic flowchart 2 of a communication method according to an embodiment of this application;
FIG. 12A and FIG. 12B are a schematic flowchart 3 of a communication method according to an embodiment of this application;
FIG. 13A and FIG. 13B are a schematic flowchart 4 of a communication method according to an embodiment of this application;
FIG. 14 is a schematic flowchart 5 of a communication method according to an embodiment of this application;
FIG. 15 is a schematic flowchart 6 of a communication method according to an embodiment of this application;
FIG. 16 is a schematic flowchart 7 of a communication method according to an embodiment of this application;
FIG. 17 is a schematic flowchart 8 of a communication method according to an embodiment of this application;
FIG. 18 is a diagram 1 of a structure of a communication apparatus according to an embodiment of this application; and
FIG. 19 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system (referred to as a 5G system (5G system, 5GS) for short)

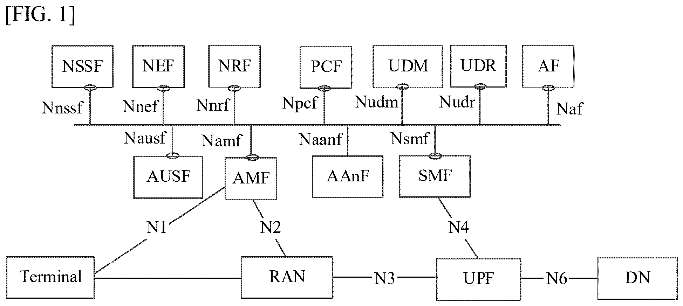

FIG. 1 is a diagram of an architecture of a 5GS. As shown in FIG. 1, the 5GS includes an access network (access network, AN) and a core network (core network, CN), and may further include a terminal.

The terminal may be a terminal having sending and receiving functions, or may be a chip or a chip system that may be disposed in the terminal. The terminal may also be referred to as a user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having wireless sending and receiving functions, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

The foregoing AN is configured to implement an access-related function, may provide a network access function for authorized users within specific areas, and can determine transmission links with different quality of service based on user levels, service requirements, and the like, for transmission of user data. The AN forwards control signals and user data between the terminal and the CN. The AN may include an access network device, also known as a radio access network (radio access network, RAN) device. The CN is mainly responsible for maintaining subscription data of mobile networks, and provides functions such as session management, mobility management, policy management, security authentication, and the like for terminals. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), and an application function (application function, AF).

The RAN device may be a device that provides access for terminals. For example, the RAN device may include a next-generation mobile communication system, for example, a 6G access network device like a 6G base station. Alternatively, in the next-generation mobile communication system, the network device may alternatively be named in other manners, and all the manners fall within the protection scope of embodiments of this application. This is not limited in this application. Alternatively, the RAN device may include a gNB in 5G, for example, a new radio (new radio, NR) system, or one or a group (including a plurality of antenna panels) of antenna panels of a base station in 5G, or may be a network node that forms a gNB, a transmission reception point (transmission reception point, TRP, or transmission point, TP), or a transmission measurement function (transmission measurement function, TMF), such as a baseband unit (building baseband unit, BBU), a central unit (central unit, CU), or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, and the like.

The UPF network element is mainly responsible for user data processing (forwarding, receiving, charging, and the like). For example, the UPF network element may receive user data from a data network (data network, DN), and forward the user data to a terminal via the access network device. The UPF network element may alternatively receive user data from a terminal via the access network device, and forward the user data to the DN. The DN network element is an operator network that provides a data transmission service for users, such as internet protocol (internet protocol, IP) multimedia service (IP multi-media service, IMS) or internet (internet). The DN may be an external network of an operator or a network controlled by the operator, and is configured to provide services for terminal devices.

The AUSF network element is mainly configured to perform terminal security authentication.

The AMF network element is mainly for mobility management in the mobile network, such as user location update, user network registration, and user handover.

The SMF network element is mainly for session management in the mobile network, such as session establishment, modification, and release. Specifically, the SMF is configured for, for example, user internet protocol (internet protocol, IP) address allocation, selection of a UPF network element that provides a data packet forwarding function, and the like.

The PCF network element mainly supports provision of a unified policy framework to govern network behavior, provides policy rules for control layer network functions, and accesses subscription information relevant for policy decision. The PCF network element may provide policies for the AMF network element and the SMF network element, such as a quality of service (quality of service, QoS) policy, a slice selection policy, and the like.

The NSSF network element is mainly configured to select network slices for terminals.

The NEF network element mainly supports exposure of capabilities and events.

The UDM network element is mainly configured for storage of user data, such as subscription data or authentication/authorization data.

The UDR network element is mainly configured for storage of structured data, including subscription data, policy data, externally exposed structured data, and applicationrelated data.

The AF mainly supports interaction with the CN to provide services, for example, influence on data routing decision, a policy control function, or providing some third-party services for a network side.

### 2. 5G multicast/broadcast (multicast/broadcast) architecture

The 5G multicast/broadcast network architecture and functions are defined as an enhancement over a 5G unicast network architecture and functions, or may be understood as an enhancement on the basis of the 5GS shown in FIG. 1. The 5G multicast/broadcast network architecture supports MBS. The MBS is a point-to-multipoint service in which data is transmitted from a single source entity to a plurality of receivers, where data may be transmitted to all users in a broadcast service area or users in a multicast group. Services having service communication models may all be referred to as the MBS. For example, mission-critical group voice/video/data communication, streaming media, live broadcast, an internet of vehicles, and railway cluster communication are all MBSs.

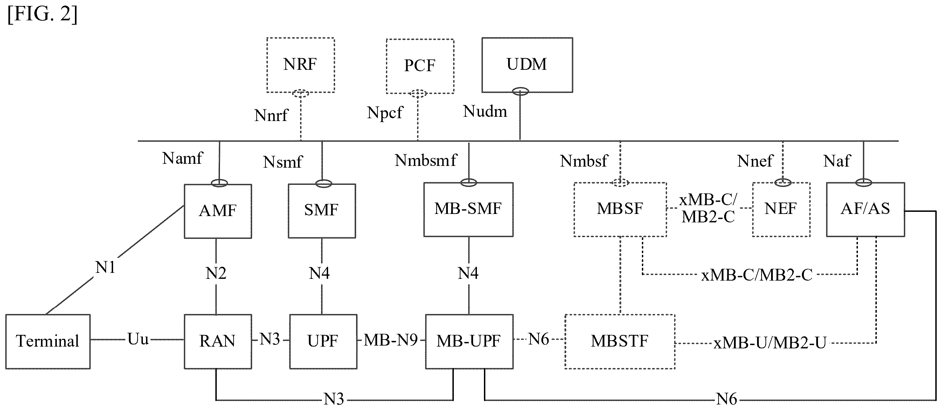

FIG. 2 is a diagram of a 5G multicast/broadcast network architecture. As shown in FIG. 2, the 5G multicast/broadcast network architecture may include:
a terminal, a RAN device, a UPF network element, a multicast/broadcast-user plane function (multicast/broadcast-user plane function, MB-UPF), a multicast/broadcast service transport function (multicast/broadcast service transport function, MBSTF), an AF/application server (application server, AS), an AMF network element, an SMF network element, a multicast/broadcast-session management function (multicast/broadcast-session management function, MB-SMF) network element, a multicast/broadcast service function (multicast/broadcast service function, MBSF) network element, an NEF network element, a PCF network element, an NRF network element, and a UDM network element. Different from the 5GS shown in FIG. 1, these network elements in the 5G multicast/broadcast network architecture may further support the following functions.

The terminal is mainly responsible for reception of multicast data through point-to-multipoint (point-to-multipoint) PTM/point-to-point (point-to-point) PTP, reception of multicast/broadcast data through PTM, QoS handling, initiation of session joining (session joining) and session leaving (session leaving), and management of MBS terminal-side resources.

The RAN device is mainly responsible for handling of MBS QoS flows (flow), sending data to terminals through PTM and/or PTP, configuring an access stratum (access stratum, AS) layer to receive broadcast flows, performing switching between PTM and PTP, supporting Xn and N2 handover of a multicast session, processing session signaling, establishing broadcast and multicast resources over air interfaces, and the like.

The UPF network element is mainly responsible for interaction with the MB-UPF network element, to receive data transmitted over individual MBS traffic delivery (individual delivery), and transmit (individual) MBS data to the terminal via a PDU session.

The MB-UPF network element, serving as a gateway of a 5G MBS data plane, is mainly responsible for interaction with the MB-SMF network element, to obtain a data forwarding rule, transmit data to a RAN in a shared (shared) delivery manner, and transmit data to the UPF network element in an individual delivery manner.

The MBSTF is an optional network element, and mainly supports serving as an anchor of the MBS data and serving as a source of internet protocol (internet protocol, IP) multicast (IP multicast), supports general transmission functions such as a frame, a multistream, and forward error correction (forward error correction, FEC), and supports sending an input file as an object (object) or an object flow (object flow) in a multicast or broadcast manner.

The AF/AS mainly supports providing service information for a 5G core network, requests a multicast or broadcast service, and instructs (instruct) to perform an MBS session (MBS session) operation with the 5G core network.

The AMF network element is mainly responsible for signaling routing, for example, routing from the RAN device to the MB-SMF network element and selecting a broadcast RAN device.

The SMF network element is usually a unicast SMF network element. To support a 5G MBS feature, the SMF network element needs to be enhanced, where enhancement mainly includes: discovery of the MB-SMF network element, authentication of terminal joining (joining), and interaction with the MB-SMF network element, to manage a multicast session context, and interact with the RAN device to establish a multicast transmission resource.

The MB-SMF network element is an entity that supports both a broadcast feature and a function of the unicast SMF network element. The MB-SMF network element is mainly responsible for MBS session management, for example, including QoS control and MB-UPF network element configuration, interaction with the RAN to control transmission of the broadcast flow (flow) (broadcast session-specific function), interaction with the SMF network element to associate a PDU session, and interaction with the RAN device to control transmission of a multicast flow (multicast session-specific function).

The MBSF network element is an optional network element, and mainly supports a service layer function, interworking with a long term evolution (long term evolution, LTE) multimedia broadcast/multicast service (multimedia broadcast/multicast service, MBMS), and interaction with the AF and the MB-SMF network element to support the MBS sessionrelated operation, for example, determine a transmission parameter and an MBS session type, selecting the MB-SMF network element, and controlling the MBSTF network element, for example, determining an IP multicast address of a sender.

The NEF network element is mainly responsible for network capability exposure, AF request authentication, discovery of a network function (network function, NF) network element, and translation of external area information into network area information.

The PCF network element is an optional network element, and such a function entity is required only when dynamic policy control and charging (policy control and charging, PCC) is used. The PCF network element is mainly responsible for QoS handling of an MBS session, providing policy (policy) information for the MB-SMF network element, and interaction with a UDR network element to obtain QoS information and the like.

The NRF network element is an optional network element, stores information about the NF network element, and may provide services such as NF registration, update, and discovery.

The UDM network element is mainly responsible for supporting multicast session subscription/subscription management.

The UDR network element is mainly responsible for supporting management of a service parameter, for example, including a QoS requirement and information about a serving (serving) MB-SMF, and supporting authorization management of the terminal for the multicast session.

### 3. Service enabler architecture layer (service enabler architecture layer, SEAL)

The SEAL is an application layer function defined by a 3rd generation partnership project (3rd generation partnership project, 3GPP) standard organization, and may be implemented by a cloud vendor to form a platform service and provide an application programming interface (application programming interface, API) for a third party, so that a developer of a third-party application is integrated into the application to reduce development costs and time.

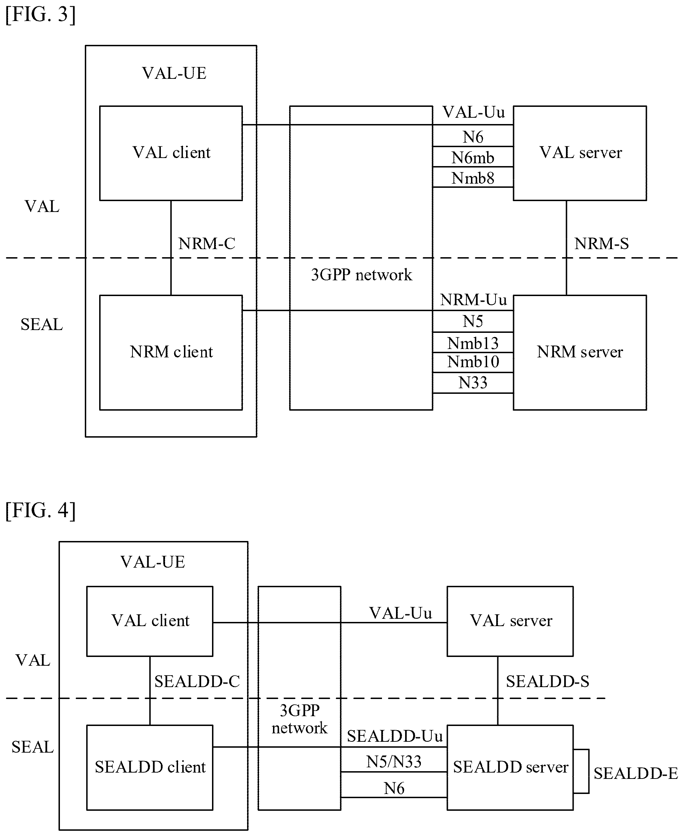

FIG. 3 is a diagram of a network architecture to which the SEAL is applicable. As shown in FIG. 3,
a network resource management (network resource management, NRM) client (NRM client) and a vertical application layer client (VAL client) are deployed on a terminal side ((vertical application layer (vertical application layer, VAL) user equipment (VAL UE)), and a network resource management server (network resource management server, NRM server) and a vertical application layer server (vertical application layer server, VAL server) are deployed on a server side.

The NRM server provides a service related to network resource management for the VAL server through an NRM-S interface, and the service may be provided in an API manner. The NRM server plays a role of an AF, and is responsible for interaction with a 5G core network via an NEF network element/an MBSF network element/an MB-SMF network element/a PCF network element, to trigger creating an MBS session at a network layer.

The NRM client and the NRM server exchange signaling through an NRM-Uu reference point (reference point)/interface (interface). For example, the NRM server may send an MBS session announcement message (MBS session announcement message) to the NRM client, where the MBS session announcement message may carry a session identifier and service description information of an MBS, for example, session description protocol (session description protocol, SDP) information or group identifier (group ID) information. The NRM server may further send a map group to session stream (map group to session stream) message to the NRM client, where the map group to session stream message may carry the session identifier of the MBS and a group identifier, to jointly indicate that group communication content corresponding to a group identifier of users is to be carried by an MBS session corresponding to the session identifier of the MBS. The NRM client may also report, to the NRM server, MBS received quality information, such as whether MBS data can be received, a level (level) of received quality, and whether a terminal has joined a specific MBS session. The NRM client provides a service related to network resource management for the VAL client through an NRM-C interface, and the service is provided in an API manner.

### 4. Service enabler architecture layer data delivery (service enabler architecture layer data delivery, SEALDD)

FIG. 4 is a diagram of a network architecture to which the SEALDD is applicable. As shown in FIG. 4, a SEALDD client (SEALDD client) and a VAL client are deployed on a terminal side, and a SEALDD server (SEALDD server) and a VAL server are deployed on a server side.

The SEALDD server communicates with the VAL server through a SEALDD-S interface. The SEALDD client and the SEALDD server perform user plane data transmission through a SEALDD-Uu interface, and the SEALDD-Uu interface is carried on a user plane session built by a 3GPP network system. The SEALDD server may communicate a control plane message with a PCF network element through an N33/N5 interface (where the N5 interface is an interface between an AF and the PCF, the N33 is an interface between the AF and an NEF, and the AF may indirectly communicate with the PCF network element via the NEF network element), to send an AF request to a 5G core network or perform notification subscription. The SEALDD server may further perform user plane data transmission with a UPF network element through an N6 interface. SEALDD servers interact with each other through a SEALDD-E interface, for example, perform control plane context transmission and user plane data forwarding. The SEALDD client communicates with the VAL client through a SEALDD-C interface.

Specifically, an uplink transmission path of user plane data may be: the VAL client→the SEALDD client→the SEALDD server→the VAL server. To be specific, the VAL client first sends an application data packet to the SEALDD client; the SEALDD client encapsulates the application data packet, and then sends an encapsulated data packet to the SEALDD server; and the SEADD server decapsulates the encapsulated data packet to obtain the application data packet, and then sends the application data packet to the VAL server. Similarly, a downlink transmission path of the user plane data is: the VAL server→the SEALDD server→the SEALDD client→the VAL client. For details, refer to related descriptions of the uplink transmission path. Details are not described herein again.

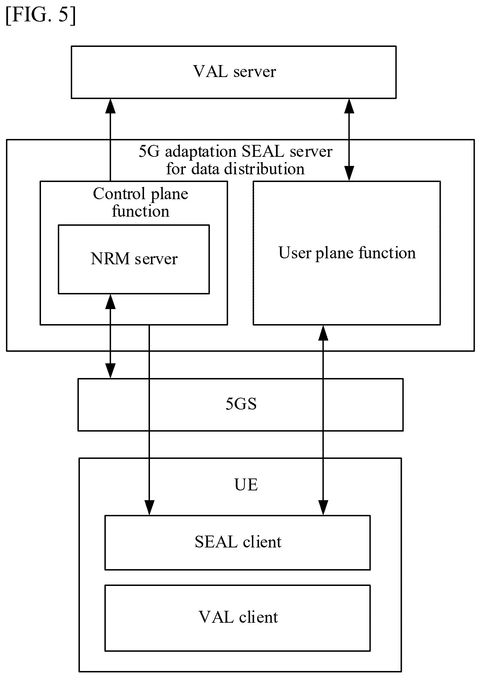

It may be understood that, the SEALDD server and an NRM server may alternatively be integrated. For example, functions of the NRM server and the SEALDD server may be deployed (or integrated) together to form a new function node. Alternatively, it may be understood as that the NRM server is implemented inside the SEALDD server. A specific architecture may be shown in FIG. 5. In FIG. 5, in an integrated network element, a 5G adaptation SEAL server for data distribution (5G adaptation SEAL server for data distribution) may include the SEALDD server with the function of the NRM server. In this case, interaction between the NRM server and the SEALDD server is implemented through internal interfaces. Alternatively, the NRM server and SEALDD server may be separately disposed and cooperatively used. In this case, interaction between the NRM server and the SEALDD server is implemented through standard service-oriented interfaces of the NRM server and the SEALDD server.

### 5. MBS session update (MBS session update) procedure

In a 5G multicast/broadcast network architecture, after an MBS session is established, an AF may trigger update of the MBS session.

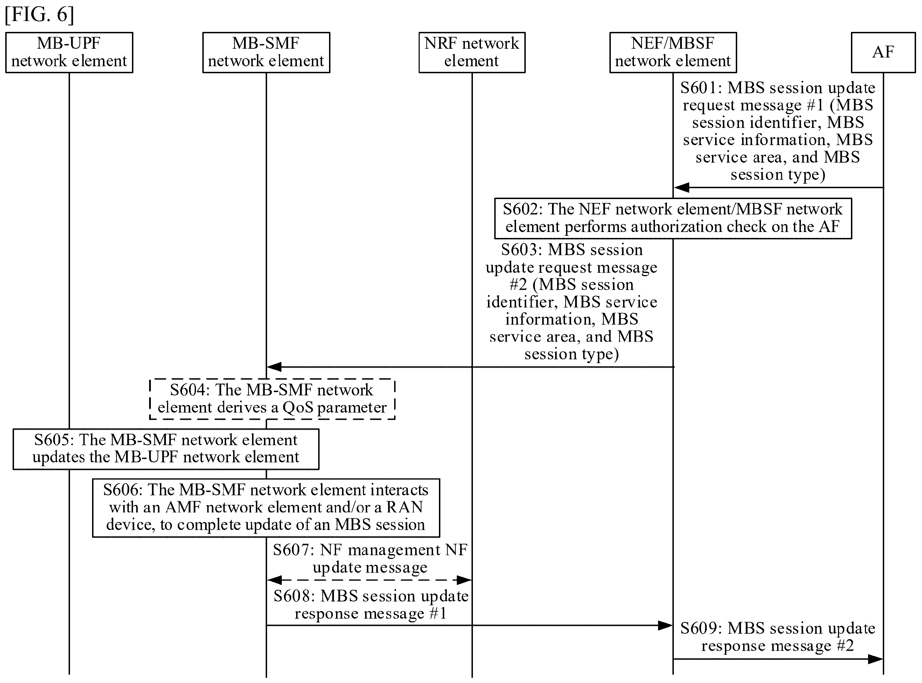

FIG. 6 is a schematic flowchart of the update of the MBS session. As shown in FIG. 6, a specific procedure is as follows.

S601: The AF sends an MBS session update request (Nnef_MBSSession_Update Request) message #1 to an NEF network element/MBSF network element. The NEF network element/MBSF network element receives the MBS session update request message #1 from the AF.

The MBS session update request message #1 may be for requesting to update the MBS session. The MBS session update request message #1 may include at least one of the following: an MBS session identifier (MBS Session ID), MBS service information (MBS service information), an MBS service area (MBS service area), or an MBS session type (MBS session state). The MBS session identifier identifies the MBS session. The MBS service information is used by the AF to describe information about the MBS session, and includes an application identifier, stream/media description information, and the like. The MBS service area is for representing an area in which data of a multicast or broadcast MBS session can be sent (which may be understood as an area in which an MBS provides a service). The MBS session type indicates whether the MBS session is a multicast session or a broadcast session. The update of the MBS session may be for updating the MBS service area. For example, the MBS service area needs to be updated from an original MBS service area #1 to an MBS service area #2 different from the MBS service area #1. In other words, an area in which the data of the MBS session needs to be sent is updated from the service area #1 to the service area #2 (which may also be understood as that the multicast/broadcast service is updated from proving a service in the service area #1 to providing a service in the service area #2). If the MBS service area in the MBS session update request message #1 is administrative address information or geographical area information, that is, the AF provides the administrative address information or the geographical area information, the NEF network element/MBSF network element is further responsible for converting the MBS service area from the administrative address information or the geographical area information into a cell identifier list (cell ID list), a tracking area identity (tracking area identity, TAI) list (TAI list), or an area session identifier list (area session ID list) that can be identified by a 5G mobile communication network. The update of the MBS session may also be for updating MBS service information for authorization, or be for activating/deactivating the MBS session.

S602: The NEF network element/MBSF network element performs authorization check on the AF.

The NEF network element/MBSF network element may initiate authentication on the AF, to determine whether the AF is trustworthy. For a specific implementation principle, refer to related descriptions in TS 29.522. Details are not described herein.

S603: The NEF network element/MBSF network element sends an MBS session update request (Nmbsmf_MBSSession_Update Request) message #2 to an MB-SMF network element.

The MB-SMF network element receives the MBS session update request message #2 from the NEF network element/MBSF network element.

The MBS session update request message #2 carries at least one of the following items mentioned above. That is, the NEF network element/MBSF network element forwards, to the MB-SMF network element, information received from the AF.

S604: The MB-SMF network element derives a QoS parameter.

Optionally, if the MB-SMF network element derives an updated QoS parameter from the MBS service information, the MB-SMF network element triggers, based on the updated QoS parameter, adding a QoS flow, removing an existing QoS flow, or updating an existing QoS flow in the MBS session, that is, S605.

S605: The MB-SMF network element updates an MB-UPF network element.

To be specific, the MB-SMF network element may trigger the MB-UPF network element to add the QoS flow, remove the existing QoS flow, or update the existing QoS flow.

S606: The MB-SMF network element interacts with an AMF network element and/or a RAN device, to complete the update of the MBS session.

If the MBS session is the broadcast session, the MB-SMF network element interacts with the RAN device, to complete update of the broadcast session. For details, refer to related descriptions in TS 23.247. Details are not described herein. If the MBS session is the multicast session, the MB-SMF network element interacts with the AMF network element and the RAN device, to complete update of the multicast session. For details, refer to related descriptions in TS 23.247. Details are not described herein.

In addition, when the MBS service area needs to be updated, the MB-SMF network element may further update the MBS service area based on the MBS session update request message #2. In this case, the MBS service area may be successfully updated or may fail to be updated.

S607: The MB-SMF network element sends an NF management NF update (Nnrf_NFManagement_NFUpdate) message to an NRF network element. The NRF network element receives the NF management NF update message from the MB-SMF network element.

Optionally, if the MB-SMF network element successfully updates the MBS service area, the MB-SMF network element sends the NF management NF update message to the NRF network element, where the NF management NF update message may carry the MBS session identifier and the MBS service area, to store an updated MBS service area or a new MBS service area in a configuration file that is of the MB-SMF network element and that is in the NRF network element.

S608: The MB-SMF network element sends an MBS session update response (Nsmf_MBSSession_Update Response) message #1 to the NEF network element/MBSF network element.

The NEF network element/MBSF network element receives the MBS session update response message #1 from the MB-SMF network element.

The MBS session update response message #1 indicates that the update of the MBS session succeeds or fails. If update of the MBS service area fails, the MBS session update response message #1 may further carry a failure indication information element, for example, an unknown MBS service area (UNKNOWN_MBS_SERVICE_AREA/404 not found), to indicate that the update of the MBS service area fails.

S609: The NEF network element/MBSF network element sends an MBS session update response (Nnef_MBSSession_Update Request) message #2 to the AF. The AF receives the MBS session update request message #2 from the NEF network element/MBSF network element.

The MBS session update response message #2 indicates that the update of the MBS session succeeds or fails. If the update of the MBS service area fails, the MBS session update response message #2 may further carry an error code, for example, an unknown MBS service area (UNKNOWN_MBS_SERVICE_AREA/404 not found), to indicate that the update of the MBS service area fails.

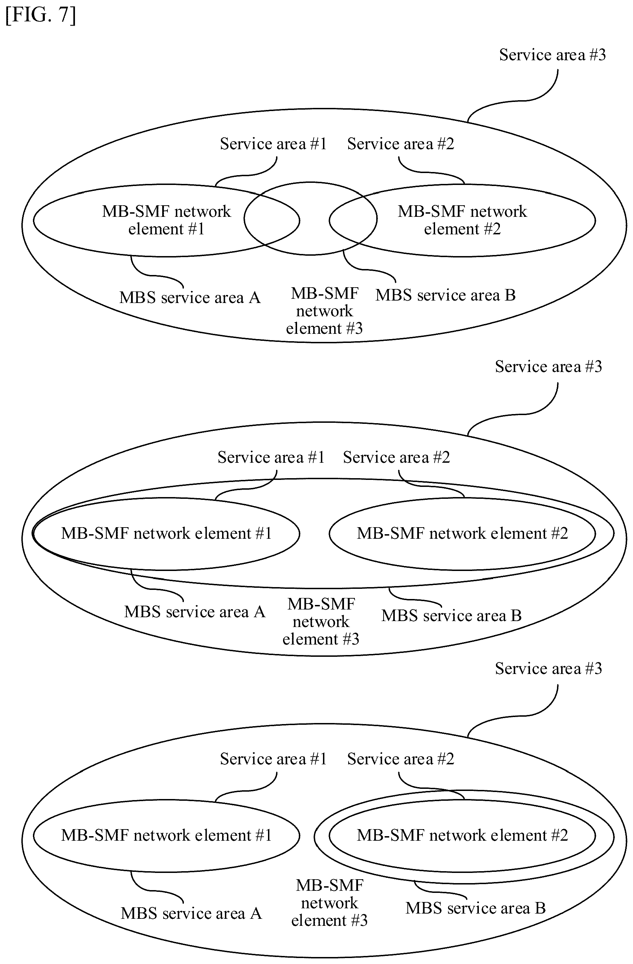

According to research on the procedure shown in FIG. 6, a reason why the MB-SMF network element fails to update the MBS service area may be that a service area of the MB-SMF network element cannot completely cover the new MBS service area. For example, as shown in FIG. 7, MB-SMF network elements include an MB-SMF network element #1, an MB-SMF network element #2, and an MB-SMF network element #3. A service area of the MB-SMF network element #1 is a service area #1, a service area of the MB-SMF network element #2 is a service area #2, and a service area of the MB-SMF network element #3 is a service area #3. An original MBS service area A of an MBS is the service area #1, the multicast/broadcast session serves the MBS, and the MB-SMF network element #1 is a serving (serving) MB-SMF network element of the multicast/broadcast session. That is, an MBS session management service is provided by the MB-SMF network element #1 for the MBS. If the AF intends to update the MBS service area from the original service area A to a new MBS service area B, update fails because the service area #1 of the MB-SMF network element #1 cannot completely cover the MBS service area B. Alternatively, another reason why the MB-SMF network element fails to update a service area of the MBS session may be that a network covering the MBS service area B does not support multicast/broadcast.

For the foregoing two reasons, the AF should perform different operations. For the first reason, to be specific, the service area of the MB-SMF network element cannot completely cover the MBS service area B, the AF may need to re-establish an MBS session, to find an MB-SMF network element that can cover the MBS service area B. For the second reason, to be specific, the network covering the MBS service area B does not support the multicast/broadcast, the AF should abandon use of the multicast/broadcast in the MBS service area B, and then use unicast transmission for a user in the MBS service area B. However, in an existing mechanism, the error code reported by the NEF network element/MBSF network element is only the unknown MBS service area. As a result, the AF cannot distinguish between the reasons why the update fails. Consequently, the AF does not know how to process the error code, cannot resolve an update failure problem, and cannot continue to ensure the service.

For the foregoing technical problem, embodiments of this application provide the following technical solutions.

The following describes the technical solutions of this application with reference to accompanying drawings.

The technical solutions in embodiments of this application may be applied to various communication systems, such as a radio network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, an LTE system or a worldwide interoperability for microwave access (worldwide interoperability for microwave access, WiMAX) communication system, a 5th generation (5th generation, 5G) communication system, for example, a new radio (new radio, NR) system, and a future communication system.

In embodiments of this application, an "indication" may include a direct indication and an indirect indication, or may include an explicit indication and an implicit indication. Information indicated by a piece of information (for example, the following first information, second information, or third information) is referred to as to-be-indicated information. During specific implementation, there are a plurality of manners of indicating the to-be-indicated information. For example, the manners include but are not limited to a manner in which the to-be-indicated information, for example, the to-be-indicated information or an index of the to-be-indicated information, may be directly indicated, or a manner in which the to-be-indicated information may be indirectly indicated by indicating other information. There is an association relationship between the other information and the to-be-indicated information Alternatively, only a part of the to-be-indicated information may be indicated, and the other part of the to-be-indicated information is known or pre-agreed on. For example, indication of specific information may alternatively be implemented by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the indication manners, refer to a conventional technology. Details are not described in this specification. It can be learned from the foregoing descriptions that, for example, when a plurality of pieces of information of a same type need to be indicated, a case in which different information is indicated in different manners may occur. During the specific implementation, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

It should be understood that, the to-be-indicated information may be sent together as a whole, or may be divided into a plurality of pieces of sub-information for separate sending. In addition, sending periodicities and/or sending occasions of the pieces of sub-information may be the same or may be different. A specific sending method is not limited in embodiments of this application. The sending periodicities and/or the sending occasions of the pieces of sub-information may be predefined, for example, predefined according to a protocol, or may be configured by a transmit-end device by sending configuration information to a receive-end device.

"Predefinition" or "preconfiguration" may be implemented by pre-storing corresponding code, a corresponding table, or another manner that can indicate related information in a device. A specific implementation of the "predefinition" or the "preconfiguration" is not limited in embodiments of this application. "Storage" may mean being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated in a decoder, a processor, or a communication apparatus. A type of the memory may be a storage medium in any form. This is not limited in embodiments of this application.

A "protocol" in embodiments of this application may be a protocol family, a standard protocol with a frame structure similar to the protocol family, or a related protocol applied to a future communication system in the communication field. This is not specifically limited in embodiments of this application.

In embodiments of this application, descriptions such as "when...", "in a case that...", "provided that...", and "if..." all mean that a device performs corresponding processing in a specific objective case, but are not intended to limit time, do not require that the device has a determining action during implementation, and do not mean that there is another limitation.

In descriptions of embodiments of this application, unless otherwise specified, "/" indicates that associated objects are in an "or" relationship. For example, A/B may indicate A or B. In embodiments of this application, "and/or" merely describes an association relationship between the associated objects and indicates that three relationships may exist. For example, A and/or B may indicate the following cases: Only A exists, both A and B exist, and only B exists, where A and B may be singular or plural. In addition, in the descriptions of embodiments of this application, unless otherwise specified, "a plurality of" means two or more. "At least one item (piece) of the following" or a similar expression thereof means any combination of these items, including a singular item (piece) or any combination of a plurality of items (pieces). For example, at least one item (piece) of a, b, or c may indicate: a, b, c, a-b, a-c, b-c, or a-b-c, where a, b, and c may be singular or plural. In addition, to clearly describe the technical solutions in embodiments of this application, words such as "first" and "second" are used in embodiments of this application to distinguish between same items or similar items that have basically same functions and roles. A person skilled in the art may understand that, the words such as "first" and "second" do not limit a quantity or an execution sequence, and the words such as "first" and "second" do not limit a specific difference. In addition, in embodiments of this application, words such as "example" or "for example" are used for representing an example, an illustration, or a description. Any embodiment or design solution described as an "example" or "for example" in embodiments of this application should not be explained as being more preferred or having more advantages than another embodiment or design solution. Rather, the words such as "example" or "for example" are used for presenting a relevant concept in a specific manner for ease of understanding.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

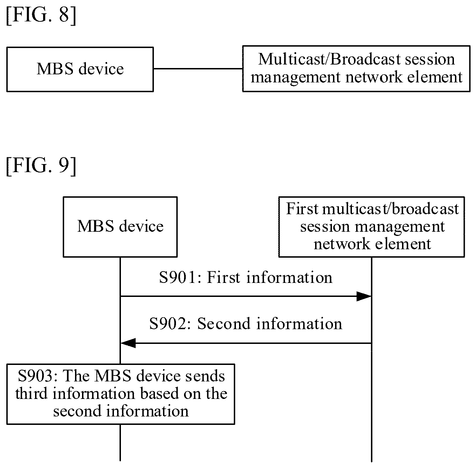

For ease of understanding of embodiments of this application, a communication system shown in FIG. 8 is first used as an example to describe in detail a communication system applicable to embodiments of this application. For example, FIG. 8 is a diagram of an architecture of a communication system to which a communication method is applicable according to an embodiment of this application.

As shown in FIG. 8, the communication system may include an MBS device and a multicast/broadcast session management network element.

The MBS device may be the NEF network element, the MBSF network element, or the AF/AS in the foregoing 5GS, and may be specifically, for example, an NRM server or a VAL server. Alternatively, in a future communication system, the MBS device may be a network element that is in any possible form or with any possible name and that is configured to implement a function in embodiments of this application.

The multicast/broadcast session management network element may be the MB-SMF network element in the foregoing 5GS, and there may be one or more multicast/broadcast session management network elements. For example, a first multicast/broadcast session management network element, namely, an MB-SMF network element #1 is included, and optionally, a second multicast/broadcast session management network element, namely, an MB-SMF network element #2 may be further included.

In the communication system, an MBS service area of a service is a second service area before being updated. The MBS device may trigger the first multicast/broadcast session management network element to establish a multicast/broadcast session for the service, where the multicast/broadcast session is denoted as a first multicast/broadcast session, to provide a multicast/broadcast service for the second service area. If the MBS service area of the service needs to be updated to a first service area, the MBS device may trigger the first multicast/broadcast session management network element to update the MBS service area. In this case, if update of the MBS service area fails, in other words, the first multicast/broadcast session management network element does not support providing the service for the first service area, the MBS device may further trigger continuation of establishing a multicast/broadcast session for the service, where the multicast/broadcast session is denoted as a multicast/broadcast session #2 (for example, the multicast/broadcast session #2 is established for the service by the second multicast/broadcast session management network element, namely, a multicast/broadcast session management network element that supports providing the service for the first service area), to provide the multicast/broadcast service for the first service area, so that the service can still continue to be ensured when the update of the MBS service area fails.

With reference to FIG. 9 to FIG. 17, the following specifically describes an interaction procedure between network elements/devices in the foregoing communication system according to method embodiments. The communication method provided in embodiments of this application is applicable to the foregoing communication system, and is specifically applied to various scenarios mentioned in the foregoing communication system. The following provides specific descriptions.

FIG. 9 is a schematic flowchart 1 of a communication method according to an embodiment of this application. The communication method is applicable to the foregoing communication system, and mainly relates to interaction between an MBS device and a first multicast/broadcast session management network element.

Specifically, as shown in FIG. 9, a procedure of the communication method is as follows.

S901: The MBS device sends first information to the first multicast/broadcast session management network element.

The first information may be for requesting to update an MBS service area. This may be understood as requesting to update the MBS service area to a first service area. The MBS service area may be a service area (an area in which a service provides a service) of a service (for example, an MBS or any other possible type of service), or a service area of an MBS session that serves the service, meaning that the service needs to use the MBS service to provide a service for users (terminal) in the MBS service area. Therefore, the first information may also be understood as being for requesting to update the MBS service area of the MBS session that serves the service to the first service area, may be understood as being for requesting to update the MBS service area of the MBS session that serves the service from a second service area to the first service area, may be understood as being for requesting to update an area in which data of the MBS session that serves the service is sent from a second service area to the first service area, or may be understood as being for requesting to update the MBS service area from a second service area to the first service area.

The second service area may be an area in which the service currently provides a service, or an area in which the service is provided before update. Therefore, the MBS device needs to request to establish a multicast/broadcast session for the service in the second service area, where the multicast/broadcast session is denoted as a multicast/broadcast session #1 (namely, the foregoing "MBS session that serves the service").

For example, an application network element (for example, a network resource management entity or an application layer service entity) may request a core network element (for example, a network capability exposure function network element) to establish the multicast/broadcast session #1 for the service. The network capability exposure function network element may determine, based on a request of the network resource management entity or the application layer service entity, a multicast/broadcast session management network element whose service area can cover the second service area, for example, the first multicast/broadcast session management network element, and request the first multicast/broadcast session management network element to establish the multicast/broadcast session #1 for the service, to provide the service for a user in the second service area. In addition, the network capability exposure function network element may further record that a multicast/broadcast session management network element that serves the multicast/broadcast session #1 is the first multicast/broadcast session management network element, for example, store a correspondence between an identifier/a communication address of the first multicast/broadcast session management network element and an identifier of the multicast/broadcast session #1, namely, an MBS session identifier, for example, a temporary multicast group identifier (temporary multicast group identifier, TMGI). For a specific implementation principle of establishing the multicast/broadcast session #1, refer to related descriptions in TS 23.247. Details are not described herein.

Optionally, in a process of establishing the multicast/broadcast session #1, if a data delivery enabling service entity, for example, a SEALDD server, is deployed, the network resource management entity may further send an ingress address/a user plane address of the data delivery enabling service entity to the application layer service entity. The ingress address/user plane address of the data delivery enabling service entity may be allocated by the network resource management entity or the data delivery enabling service entity. This is not specifically limited.

Optionally, the network resource management entity may further store an association relationship between an ingress address of the multicast/broadcast session #1 and the ingress address/user plane address of the data delivery enabling service entity. The ingress address (allocated ingress) of the multicast/broadcast session #1 may be for receiving data of the service; or the ingress address of the multicast/broadcast session #1 is an ingress for the multicast/broadcast session #1 to receive data of the service, and may be specifically an address of a first multicast/broadcast user plane network element that serves as an anchor of the multicast/broadcast session #1.

Optionally, when the network resource management entity and the data delivery enabling service entity are separately deployed, the network resource management entity may further send the ingress address of the multicast/broadcast session #1 to the data delivery enabling service entity, and optionally, may further send a stream descriptor of the application layer service entity, for example, a 5-tuple (a source/target IP address, a source/target port, and a protocol) or a 3-tuple (an IP address, a port number, and a protocol of the application layer service entity), so that the data delivery enabling service entity can identify the data of the service from the application layer service entity, and send the data to the multicast/broadcast session #1, that is, send the data to the ingress address of the multicast/broadcast session #1.

It may be understood that, in the process of establishing the multicast/broadcast session #1, the MBS device may be the network resource management entity, the application layer service entity, or the network capability exposure function network element. This is not specifically limited.

The first service area may be an area in which the service needs to provide a service in the future. The first service area may be an area different from the second service area, and any one of the following relationships is satisfied: The second service area partially overlaps the first service area, the second service area does not overlap the first service area, or the first service area includes the second service area. The relationships may be specifically flexibly selected based on an actual situation. This is not specifically limited.

For ease of understanding, the following uses an example for description.

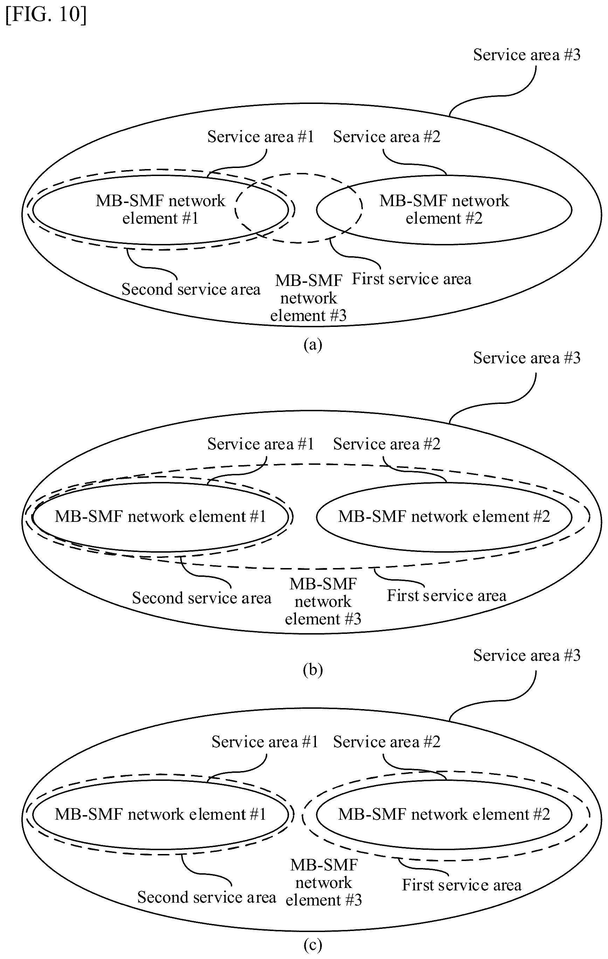

As shown in FIG. 10, a service area of an MB-SMF network element #1 is a service area #1, a service area of an MB-SMF network element #2 is a service area #2, and a service area of an MB-SMF network element #3 is a service area #3. The second service area is the service area #1, and the first service area is an area shown by a "dashed box" in FIG. 10. As shown in (a) in FIG. 10, the first service area separately covers a part of the service area #1 and a part of the service area #2. In this case, that the second service area partially overlaps the first service area means that a part of the second service area overlaps a part of the first service area. As shown in (b) in FIG. 10, the first service area completely covers the service area #1 and the service area #2. In this case, that the second service area partially overlaps the first service area means that a part of the first service area completely covers the second service area. As shown in (c) in FIG. 10, the first service area completely covers the service area #2, while does not cover the service area #1, that is, the second service area does not overlap the first service area.

The first service area may be determined by the network resource management entity or the application layer service entity. For example, the application layer service entity may obtain, from terminals receiving the service of the application layer service entity, locations of these terminals, for example, from terminals joining a multicast group of the multicast/broadcast session #1, and/or from terminals that can receive broadcast of the multicast/broadcast session #1. Alternatively, the application layer service entity may obtain locations of terminals from another function entity, for example, from a location server at a SEAL layer, the core network element like the network capability exposure function network element or a gateway mobile location center (gateway mobile location center, GMLC). In this way, the application layer service entity may determine the first service area based on the locations of these terminals. For example, the first service area may be an area covered by a union set of the locations of these terminals. In addition, the application layer service entity triggers the update of the MBS service area based on the first service area. Similarly, a specific implementation principle of determining the first service area by the network resource management entity is similar to that of the application layer service entity. Reference may be made for understanding. Details are not described herein again.

In this embodiment of this application, the first information may be an existing message, for example, a multicast/broadcast session update request (MBS session update request) message (for example, the following multicast/broadcast session update request message #1, multicast/broadcast session update request message #2, and multicast/broadcast session update request message #3). That is, the existing message is reused for implementation to reduce implementation difficulty.

The multicast/broadcast session update request message may carry the identifier of the multicast/broadcast session #1 and information about the MBS service area. For the identifier of the multicast/broadcast session #1, refer to the foregoing related descriptions. Details are not described herein again. The MBS service area may indicate the first service area, for example, may be administrative address information or geographical area information of the first service area, or may be a cell identifier list or a TAI list corresponding to the first service area. In this way, a combination of two identifiers may indicate that the MBS service area of the multicast/broadcast session #1 is requested to be updated to the first service area, or indicate that the MBS service area of the multicast/broadcast session #1 is requested to be updated from the second service area to the first service area. Further, because the multicast/broadcast session #1 is associated with the service, in other words, the multicast/broadcast session #1 is a session established for the service, the combination of the two identifiers may also implicitly indicate that the MBS service area is requested to be updated to the first service area, or indicate that the MBS service area is requested to be updated from the second service area to the first service area.

For example, if the application layer service entity triggers the update of the MBS service area, after determining the first service area based on the locations of the terminals, the application layer service entity may further determine information indicating the MBS service area of the first service area, generate a multicast/broadcast session update request message carrying information such as the identifier of the multicast/broadcast session #1 or the information about the MBS service area, where the multicast/broadcast session update request message is denoted as a multicast/broadcast session update request message #1, and then send the multicast/broadcast session update request message #1 (which may also be referred to as a multicast/broadcast resource update request message) to the network resource management entity.

If the application layer service entity triggers the update of the MBS service area, after receiving the multicast/broadcast session update request message #1 from the application layer service entity, the network resource management entity may obtain the information in the multicast/broadcast session update request message #1, for example, the identifier of the multicast/broadcast session #1 and/or the information about the MBS service area, so that the MBS service area needs to be updated to the first service area, that is, learn of the first service area, and then learn that the first service area is updated from the second service area. In this way, the network resource management entity may generate a multicast/broadcast session update request message carrying the information such as the identifier of the multicast/broadcast session #1 or the information about the MBS service area, where the multicast/broadcast session update request message is denoted as a multicast/broadcast session update request message #2, and then send the multicast/broadcast session update request message #2 to the network capability exposure function network element. Alternatively, if the network resource management entity triggers the update of the MBS service area, the network resource management entity may also generate the multicast/broadcast session update request message #2 in a manner similar to that of the application layer service entity, and then send the multicast/broadcast session update request message #2 to the network capability exposure function network element.

After receiving the multicast/broadcast session update request message #2 from the network resource management entity, the network capability exposure function network element may obtain the information in the multicast/broadcast session update request message #2, for example, the identifier of the multicast/broadcast session #1 or the information about the MBS service area, to learn that the MBS service area needs to be updated to the first service area, that is, learn of the first service area, and then learn that the first service area is updated from the second service area. In this way, the network capability exposure function network element may generate a multicast/broadcast session update request message carrying the information, where the multicast/broadcast session update request message is denoted as a multicast/broadcast session update request message #3, and then send the multicast/broadcast session update request message #3 to the first multicast/broadcast session management network element based on the pre-stored identifier of the first multicast/broadcast session management network element.

It can be learned that, if the network resource management entity triggers the update of the MBS service area, there is no application layer service entity to trigger the update of the MBS service area, and there is no interaction of the multicast/broadcast session update request message #1 either, and the network resource management entity may automatically trigger generation of the multicast/broadcast session update request message #2 and perform subsequent interaction.

It may be understood that, in the foregoing process of determining the first service area and transmitting the multicast/broadcast session update request message, the MBS device may be the application layer service entity, and the first information may be the multicast/broadcast session update request message #1. Alternatively, the MBS device may be the network resource management entity, and the first information may be the multicast/broadcast session update request message #2. Alternatively, the MBS device may be the network capability exposure function network element, and the first information may be the multicast/broadcast session update request message #3. In this case, that the MBS device sends the first information to the first multicast/broadcast session management network element may be understood as follows: The MBS device directly sends the first information to the first multicast/broadcast session management network element. Alternatively, that the MBS device sends the first information to the first multicast/broadcast session management network element may be understood as follows: The MBS device indirectly sends the first information to the first multicast/broadcast session management network element, for example, sends the first information to an intermediate network element/entity between the MBS device and the first multicast/broadcast session management network element. This is not specifically limited.

It may be further understood that, that the first information is the existing message is merely an example, and is not used as a limitation. For example, the first information may alternatively be a newly defined message, or the first information may be an information element in the existing message or the newly defined message. This is not specifically limited either.

S902: The MBS device receives second information from the first multicast/broadcast session management network element.

The second information may be for responding to the first information, for example, indicate that the update of the MBS service area fails. The second information may carry a character string, for example, an error code, which may be specifically an unknown MBS service area (404 not found), to indicate that the update of the MBS service area fails. In other words, the unknown MBS service area and that the update of the MBS service area fails may be mutually replaced for understanding, but are not used as a limitation. That the update of the MBS service area fails may alternatively be indicated in any other possible manner. An implementation of a specific indication manner is not limited in this embodiment of this application. For example, the second information may carry 1 bit (bit) of information, "0" indicates that the update of the MBS service area fails, and "1" indicates that the update of the MBS service area succeeds. For another example, the second information may carry enumeration-type information, and different filling values indicate whether the update of the MBS service area succeeds or fails.

The second information may be an existing message, for example, a multicast/broadcast session update response (MBS session update response) message (for example, the following multicast/broadcast session update response message #1, multicast/broadcast session update response message #2, and multicast/broadcast session update response message #3). That is, the existing message is reused for implementation to reduce implementation difficulty.

For example, after receiving the multicast/broadcast session update request message #3, the first multicast/broadcast session management network element may obtain the information such as the identifier of the multicast/broadcast session #1 or the information about the MBS service area from the multicast/broadcast session update request message #3, to determine that the MBS service area needs to be updated to the first service area. In this case, because a service area of the first multicast/broadcast session management network element cannot completely cover the first service area, and the first multicast/broadcast session management network element cannot provide the service for the first service area, the first multicast/broadcast session management network element determines that the update of the MBS service area fails, and sends the multicast/broadcast session update response message #1 to the network capability exposure function network element, to indicate that the update of the MBS service area fails.

For ease of understanding, the foregoing example continues to be used.

As shown in FIG. 10, when the first service area is the area shown by the "dashed box" in FIG. 10, in any one of cases, the service area of the MB-SMF network element #1 cannot completely cover the first service area. Therefore, the MB-SMF network element #1 cannot provide the service for the first service area, and the update of the MBS service area fails.

In this embodiment of this application, when the first multicast/broadcast session management network element sends the multicast/broadcast session update response message #1 to the network capability exposure function network element, the network capability exposure function network element may receive the multicast/broadcast session update response message #1 from the first multicast/broadcast session management network element. Whether the network capability exposure function network element further needs to send a multicast/broadcast session update response message to the application layer service entity may depend on whether continuation of establishing a multicast/broadcast session for the service is triggered by the network capability exposure function network element when the service area fails to be updated.

If continuation of establishing the multicast/broadcast session for the service is not triggered by the network capability exposure function network element (for example, is triggered by the application network element), the network capability exposure function network element may send a multicast/broadcast session update response message to the application network element (for example, the network resource management entity) based on the multicast/broadcast session update response message #1, where the multicast/broadcast session update response message is denoted as a multicast/broadcast session update response message #2. For example, the network capability exposure function network element may obtain related information, for example, the foregoing error code, from the multicast/broadcast session update response message #1, generate the multicast/broadcast session update response message #2 carrying the information, and send the multicast/broadcast session update response message #2 to the network resource management entity, to indicate that the update of the MBS service area fails.

If the network capability exposure function network element triggers continuation of establishing the multicast/broadcast session for the service, the network capability exposure function network element may trigger execution of S903 based on the multicast/broadcast session update response message #1. In other words, the network capability exposure function network element does not send the multicast/broadcast session update response message #2 at this occasion, but sends the multicast/broadcast session update response message #2 at other subsequent time. For details, refer to the following related descriptions. Details are not described herein.

When the network capability exposure function network element sends the multicast/broadcast session update response message #2 to the network resource management entity, the network resource management entity may correspondingly receive the multicast/broadcast session update response message #2 from the network capability exposure function network element. Whether the network resource management entity further needs to send a multicast/broadcast session update response message to the application layer service entity may depend on whether continuation of establishing the multicast/broadcast session for the service is triggered by the network resource management entity when the update of the service area fails.

If continuation of establishing the multicast/broadcast session for the service is not triggered by the network resource management entity (for example, is triggered by the application layer service entity), the network resource management entity may further send the multicast/broadcast session update response message #3 to the application layer service entity based on the multicast/broadcast session update response message #2. For example, the network resource management entity may obtain related information, for example, the foregoing error code, from the multicast/broadcast session update response message #2, generate the multicast/broadcast session update response message #3 carrying the information, and send the multicast/broadcast session update response message #3 to the application layer service entity, to indicate that the update of the MBS service area fails, so that the application layer service entity can trigger execution of S903 based on the multicast/broadcast session update response message #3.

If the network resource management entity triggers continuation of establishing the multicast/broadcast session for the service, the network resource management entity may trigger execution of S903 based on the multicast/broadcast session update response message #2. In other words, the network resource management entity does not send the multicast/broadcast session update response message #3 at this occasion, but sends the multicast/broadcast session update response message #3 at other subsequent time. For details, refer to the following related descriptions. Details are not described herein.

It may be understood that, in the foregoing process of transmitting the multicast/broadcast session update response message, the MBS device may alternatively be the network capability exposure function network element, and the second information may be the multicast/broadcast session response request message #1. Alternatively, the MBS device may be the network resource management entity, and the second information may be the multicast/broadcast session update response message #2. Alternatively, the MBS device may be the application layer service entity, and the second information may be the multicast/broadcast session update request message #3. In this case, that the MBS device receives the second information from the first multicast/broadcast session management network element may be understood as follows: The MBS device directly receives the second information from the first multicast/broadcast session management network element. Alternatively, that the MBS device receives the second information from the first multicast/broadcast session management network element may be understood as follows: The MBS device indirectly receives the second information from the first multicast/broadcast session management network element, for example, receives the second information from an intermediate network element/entity between the MBS device and the first multicast/broadcast session management network element. This is not specifically limited.

It may be further understood that, that the second information is the existing message is merely an example, and is not used as a limitation. For example, the second information may alternatively be a newly defined message, or the second information may be an information element in the existing message or the newly defined message. This is not specifically limited either.

S903: The MBS device sends third information based on the second information.

The third information may include information about the first service area, for example, an identifier of the MBS service area, to indicate the first service area. In this way, the third information may be for triggering establishing a multicast/broadcast session for the service, or for triggering establishing, for the service, a multicast/broadcast session that serves the first service area, that is, establishing a multicast/broadcast session different from the multicast/broadcast session #1 or a new multicast/broadcast session.

The third information may be an existing message, for example, a multicast/broadcast session create request (MBS session create request) message (for example, the following multicast/broadcast session create request message #1, multicast/broadcast session create request message #2, and multicast/broadcast session create request message #3). That is, the existing message is reused for implementation to reduce implementation difficulty.

Manner 1: The MBS device is the application layer service entity, and the application layer service entity may trigger establishing the multicast/broadcast session for the service. In this case, the third information may be a multicast/broadcast session create request message sent by the application layer service entity, where the multicast/broadcast session create request message is denoted as a multicast/broadcast session create request message #1.

For example, the application layer service entity may determine, based on the received multicast/broadcast session update response message #3, that the update of the MBS service area fails, to trigger establishing, for the service, the multicast/broadcast session that serves the first service area, and then send the multicast/broadcast session create request message #1 to the network resource management entity, to request the network resource management entity to trigger establishing, for the service, the multicast/broadcast session that serves the first service area.

The network resource management entity may receive the multicast/broadcast session create request message #1 from the application layer service entity. The network resource management entity may determine, based on the received multicast/broadcast session create request message #1, to establish, for the service, the multicast/broadcast session that serves the first service area. In this way, the network resource management entity may further send a multicast/broadcast session create request message to the network capability exposure function network element, where the multicast/broadcast session create request message is denoted as a multicast/broadcast session create request message #2, to request the network capability exposure function network element to trigger establishing, for the service, the multicast/broadcast session that serves the first service area. For example, the network resource management entity may obtain related information, for example, the information about the first service area, from the multicast/broadcast session create request message #1, generate the multicast/broadcast session create request message #2 carrying the information about the first service area, and then send the multicast/broadcast session create request message #2 to the network capability exposure function network element.

The network capability exposure function network element may receive the multicast/broadcast session create request message #2 from the network resource management entity. The network capability exposure function network element may further determine, based on the received multicast/broadcast session create request message #2, to establish, for the service, the multicast/broadcast session that serves the first service area. In this way, the network capability exposure function network element may determine whether a multicast/broadcast session management network element whose service area has an intersection set with the first service area or a multicast/broadcast session management network element that can serve the first service area can be discovered.

For example, the network capability exposure function network element may discover, from a network repository function network element based on the information about the first service area, the multicast/broadcast session management network element that can serve the first service area, for example, a second multicast/broadcast session management network element. Specifically, the network capability exposure function network element may send a network element discovery request message to the network repository function network element, where the network element discovery request message may carry a target network element type as the multicast/broadcast session management network element or the information about the first service area, that is, indicate that a multicast/broadcast session management network element that matches the first service area needs to be discovered, or the multicast/broadcast session management network element that can serve the first service area needs to be discovered, or a multicast/broadcast session management network element whose service area can completely cover the first service area needs to be discovered. The network repository function network element may determine, based on the received network element discovery request message, to discover the multicast/broadcast session management network element that matches the first service area, for example, the second multicast/broadcast session management network element, and return information about the second multicast/broadcast session management network element to the network capability exposure function network element.

It may be understood that, there may be one second multicast/broadcast session management network element, and a service area of the single second multicast/broadcast session management network element can completely cover the first service area; or there may be a plurality of second multicast/broadcast session management network elements, and a union set of service areas of the plurality of second multicast/broadcast session management network elements can also completely cover the first service area. This is not specifically limited in this embodiment of this application. In this way, the network capability exposure function network element may further send a multicast/broadcast session create request message to the second multicast/broadcast session management network element, where the multicast/broadcast session create request message is denoted as a multicast/broadcast session create request message #3. In addition, the complete coverage of the first service area mentioned in this embodiment of this application is merely an example, and may also be replaced with or understood as another expression, for example, partial coverage of the first service area, majority coverage of the first service area, or nearcomplete coverage of the first service area. This is not limited.

For ease of understanding, the foregoing example continues to be used.

As shown in (a) in FIG. 10, the first service area separately covers a part of the service area #1 and a part of the service area #2. In this case, the service area of the MB-SMF network element #3 can completely cover the first service area, or a combination of the service area of the MB-SMF network element #1 and the service area of the MB-SMF network element #2 can completely cover the first service area. Therefore, if there is one second multicast/broadcast session management network element, the second multicast/broadcast session management network element is the MB-SMF network element #3; or if there are a plurality of second multicast/broadcast session management network elements, the second multicast/broadcast session management network elements are the MB-SMF network element #1 and the MB-SMF network element #2.

As shown in (b) in FIG. 10, the first service area completely covers the service area #1 and the service area #2. In this case, the service area of the MB-SMF network element #3 can completely cover the first service area. Therefore, the second multicast/broadcast session management network element is the MB-SMF network element #3.

As shown in (c) in FIG. 10, the first service area completely covers the service area #2, while does not cover the service area #1. In this case, the service area of the MB-SMF network element #2 can completely cover the first service area. Therefore, the second multicast/broadcast session management network element is the MB-SMF network element #2.

It can be learned that, the network capability exposure function network element needs to first determine a multicast/broadcast session management network element that can provide the multicast/broadcast service for the first service area, and then trigger establishing the multicast/broadcast session. In this way, it can be ensured that the multicast/broadcast session for the first service area can be successfully established, so that the service can still continue to be ensured when the update of the MBS service area of the multicast/broadcast session fails.

It may be understood that, in Manner 1, the application layer service entity may trigger establishing the multicast/broadcast session for the service, that is, has a capability of triggering continuation of establishing the multicast/broadcast session for the service, and this capability is not possessed by an existing application layer service entity. Therefore, the application layer service entity may also be considered as an application layer service entity on which capability upgrade is performed, namely, an upgraded application layer service entity. On the contrary, if the application layer service entity cannot trigger continuation of establishing the multicast/broadcast session for the service, the application layer service entity is an application layer service entity that is not upgraded.

The second multicast/broadcast session management network element may receive the multicast/broadcast session create request message #3 from the network capability exposure function network element. The second multicast/broadcast session management network element may establish, for the service based on the multicast/broadcast session create request message #3, the multicast/broadcast session that serves the first service area, where the multicast/broadcast session is denoted as a multicast/broadcast session #2, to provide the service for a user in the first service area. In addition, for a specific implementation principle of establishing the multicast/broadcast session #2, refer to the related descriptions in TS 23.247. Details are not described herein.

Manner 2: The MBS device is the network resource management entity, and the network resource management entity may trigger continuation of establishing the multicast/broadcast session for the service. In this case, the third information may be the multicast/broadcast session create request message #2 sent by the network resource management entity.

For example, the network resource management entity may determine, based on the received multicast/broadcast session update response message #2, that the update of the MBS service area fails, to trigger establishing, for the service, the multicast/broadcast session that serves the first service area, and then send the multicast/broadcast session create request message #2 to the network capability exposure function network element, to request the network capability exposure function network element to trigger establishing, for the service, the multicast/broadcast session that serves the first service area.

The network capability exposure function network element may receive the multicast/broadcast session create request message #2 from the network resource management entity. The network capability exposure function network element may determine, based on the received multicast/broadcast session create request message #2, to establish, for the service, the multicast/broadcast session that serves the first service area, to discover a multicast/broadcast session management network element whose service area has an intersection set with the first service area, and perform a corresponding procedure. For a specific implementation principle, refer to related descriptions of Manner 1. Details are not described herein again.

It may be understood that, in Manner 2, the network resource management entity may trigger continuation of establishing the multicast/broadcast session for the service. Therefore, the network resource management entity may also be considered as a network resource management entity on which capability upgrade is performed, namely, an upgraded network resource management entity. On the contrary, if the network resource management entity cannot trigger continuation of establishing the multicast/broadcast session for the service, the network resource management entity is a network resource management entity that is not upgraded.

It may be further understood that, based on Manner 1 and Manner 2, that the procedure of establishing the multicast/broadcast session may be directly triggered by the network resource management entity can be learned. Compared with direct triggering by the application layer service entity, the direct triggering by the network resource management entity may reduce interaction between the network resource management entity and the application layer service entity, to reduce communication overheads and improve communication efficiency.

Manner 3: The MBS device is the network capability exposure function network element, and the network capability exposure function network element may trigger continuation of establishing the multicast/broadcast session for the service. In this case, the third information may be the multicast/broadcast session create request message #3 sent by the network capability exposure function network element.

It may be understood that, in Manner 3, the network capability exposure function network element may trigger continuation of establishing the multicast/broadcast session for the service. Therefore, the network capability exposure function network element may also be considered as a network capability exposure function network element on which capability upgrade is performed, namely, an upgraded network capability exposure function network element. On the contrary, if the network capability exposure function network element cannot trigger continuation of establishing the multicast/broadcast session for the service, the network capability exposure function network element is a network capability exposure function network element that is not upgraded.

For example, the network capability exposure function network element may determine, based on the received multicast/broadcast session update response message #1, that the update of the MBS service area fails, to trigger establishing, for the service, the multicast/broadcast session that serves the first service area. In this way, the network capability exposure function network element may discover a multicast/broadcast session management network element whose service area has an intersection set with the first service area, and perform a corresponding procedure. For a specific implementation principle, refer to related descriptions of Manner 1. Details are not described herein again.

In conclusion, when an MBS service area of a service for which a multicast/broadcast session has been established fails to be updated to the first service area, the MBS device may further trigger continuation of establishing a multicast/broadcast session for the service, so that a subsequently established multicast/broadcast session can provide the service for the first service area. In this way, the service can still continue to be ensured when update of the MBS service area fails.

In a first possible design solution, with reference to the method shown in FIG. 9, in the method, the MBS device may further receive fourth information.

The fourth information may be a response to the third information, for example, carry an identifier of the multicast/broadcast session #2, namely, an MBS session identifier, for example, a TMGI, to indicate that the multicast/broadcast session #2 is successfully established. The fourth information may be an existing message, for example, a multicast/broadcast session create response (MBS session create response) message (for example, the following multicast/broadcast session create response message #1, multicast/broadcast session create response message #2, and multicast/broadcast session create response message #3). That is, the existing message is reused for implementation to reduce implementation difficulty. The following provides specific descriptions.

With reference to Manner 1, because continuation of establishing the multicast/broadcast session for the service is triggered by the application layer service entity, a message indicating an establishment result of the multicast/broadcast session, for example, the multicast/broadcast session create response message, usually needs to be transmitted to the application layer service entity.

For example, after determining that the multicast/broadcast session #2 is successfully established, the second multicast/broadcast session management network element may generate a multicast/broadcast session create response message carrying the identifier of the multicast/broadcast session #2, where the multicast/broadcast session create response message is denoted as a multicast/broadcast session create response message #1, and send the multicast/broadcast session create response message #1 to the network capability exposure function network element, to respond to the multicast/broadcast session create request message #3.

The network capability exposure function network element may receive the multicast/broadcast session create response message #1 from the second multicast/broadcast session management network element, to determine that the multicast/broadcast session #2 is successfully established. The network capability exposure function network element may further send a multicast/broadcast session create response message to the network resource management entity based on the multicast/broadcast session create response message #1, where the multicast/broadcast session create response message is denoted as a multicast/broadcast session create response message #2. For example, the network capability exposure function network element may obtain the identifier of the multicast/broadcast session #2 from the multicast/broadcast session create response message #1, generate the multicast/broadcast session create response message #2 carrying the identifier of the multicast/broadcast session #2, and send the multicast/broadcast session create response message #2 to the network resource management entity, to respond to the multicast/broadcast session create request message #2.

The network resource management entity may receive the multicast/broadcast session create response message #2 from the network capability exposure function network element, to determine that the multicast/broadcast session #2 is successfully established. The network resource management entity may further send a multicast/broadcast session create response message to the application layer service entity based on the multicast/broadcast session create response message #2, where the multicast/broadcast session create response message is denoted as a multicast/broadcast session create response message #3. For example, the network resource management entity may obtain the identifier of the multicast/broadcast session #2 from the multicast/broadcast session create response message #2, generate the multicast/broadcast session create response message #3 carrying the identifier of the multicast/broadcast session #2, and send the multicast/broadcast session create response message #3 to the application layer service entity, to respond to the multicast/broadcast session create request message #1. In this way, the application layer service entity can determine, based on the multicast/broadcast session create response message #3, that the multicast/broadcast session #2 is successfully established.

In Manner 1, the MBS device may be the network capability exposure function network element, and the fourth information may be the multicast/broadcast session create response message #1. Alternatively, the MBS device may be the network resource management entity, and the fourth information may be the multicast/broadcast session create response message #2. Alternatively, the MBS device may be the application layer service entity, and the fourth information may be the multicast/broadcast session create response message #3. In addition, the fourth information may not only carry the identifier of the multicast/broadcast session #2, but may also optionally carry the identifier of the multicast/broadcast session #1, to indicate that the original multicast/broadcast session #1 needs to be replaced with the new multicast/broadcast session #2 to trigger the service to use the multicast/broadcast session #2 or switch transmission of the data of the service from the multicast/broadcast session #1 to the multicast/broadcast session #2.

With reference to Manner 2, similar to a principle of Manner 1, because continuation of establishing the multicast/broadcast session for the service is triggered by the network resource management entity, the multicast/broadcast session create response message usually needs to be transmitted to the network resource management entity.

For example, the second multicast/broadcast session management network element may send the multicast/broadcast session create response message #1 to the network capability exposure function network element in a manner similar to Manner 1. Correspondingly, after receiving the multicast/broadcast session create response message #1, the network capability exposure function network element may also send the multicast/broadcast session create response message #2 to the network resource management entity in a manner similar to Manner 1. In this way, the network resource management entity can determine, based on the multicast/broadcast session create response message #2, that the multicast/broadcast session #2 is successfully established.

In Manner 2, the MBS device may be the network capability exposure function network element, and the fourth information may be the multicast/broadcast session create response message #1. Alternatively, the MBS device may be the network resource management entity, and the fourth information may be the multicast/broadcast session create response message #2.

It may be understood that, based on the foregoing related descriptions, when the network resource management entity triggers continuation of establishing the multicast/broadcast session for the service, the network resource management entity does not send the multicast/broadcast session update response message #3 to the application layer service entity in advance. Therefore, when the multicast/broadcast session #2 is successfully established, the network resource management entity may further send the multicast/broadcast session update response message #3 to the application layer service entity, where the multicast/broadcast session update response message #3 may carry the identifier of the multicast/broadcast session #2, to indicate that the multicast/broadcast session #2 is successfully established.

With reference to Manner 3, similar to a principle of Manner 1, because continuation of establishing the multicast/broadcast session for the service is triggered by the network capability exposure function network element, the multicast/broadcast session create response message usually also needs to be transmitted to the network capability exposure function network element.

For example, the second multicast/broadcast session management network element may send the multicast/broadcast session create response message #1 to the network capability exposure function network element in a manner similar to Manner 1. In this way, the network capability exposure function network element can determine, based on the multicast/broadcast session create response message #1, that the multicast/broadcast session #2 is successfully established.

In Manner 3, the MBS device may be the network capability exposure function network element, and the fourth information may be the multicast/broadcast session create response message #1.

It may be understood that, based on the foregoing related descriptions, when triggering is performed by the network capability exposure function network element, the network capability exposure function network element does not send the multicast/broadcast session update response message #2 to the network resource management entity in advance. Therefore, when the multicast/broadcast session #2 is successfully established, the network capability exposure function network element may further send the multicast/broadcast session update response message #2 to the network resource management entity, where the multicast/broadcast session update response message #2 may carry the identifier of the multicast/broadcast session #2, to indicate that the multicast/broadcast session #2 is successfully established. Similarly, the network resource management entity may also send the multicast/broadcast session update response message #3 to the application layer service entity, where the multicast/broadcast session update response message #3 may also carry the identifier of the multicast/broadcast session #2, to indicate that the multicast/broadcast session #2 is successfully established.

It may be further understood that, that the fourth information is the existing message is merely an example, and is not used as a limitation. For example, the fourth information may alternatively be a newly defined message, or the fourth information may be an information element in the existing message or the newly defined message. This is not specifically limited either.

In a second possible design solution, with reference to the method shown in FIG. 9, in the method, the network capability exposure function network element and the network resource management entity may further transmit an ingress address of the multicast/broadcast session #2. The ingress address of the multicast/broadcast session #2 may be for receiving the data of the service; or the ingress address of the multicast/broadcast session #2 is an ingress for the multicast/broadcast session #2 to receive the data of the service, and may be specifically an address of a second multicast/broadcast user plane network element that serves as an anchor of the multicast/broadcast session #2.

Specifically, the second multicast/broadcast session management network element may obtain the ingress address of the multicast/broadcast session #2 in a process of establishing the multicast/broadcast session #2. Subsequently, the second multicast/broadcast session management network element may send the ingress address of the multicast/broadcast session #2 to the network capability exposure function network element. In this case, the ingress address of the multicast/broadcast session #2 may be carried in the multicast/broadcast session create response message #1 in Manner 1 to Manner 3, or may be carried in any other possible message. This is not limited.

The network capability exposure function network element may receive the ingress address of the multicast/broadcast session #2 from the second multicast/broadcast session management network element, and send the ingress address of the multicast/broadcast session #2 to the application network element (for example, the network resource management entity). In this case, the ingress address of the multicast/broadcast session #2 may be carried in the multicast/broadcast session create response message #2 in Manner 1 and Manner 2 or in the multicast/broadcast session update response message #2 in Manner 3, or may be carried in any other possible message. This is not limited.

The network resource management entity may receive the ingress address of the multicast/broadcast session #2 from the network capability exposure function network element. In this case, how the network resource management entity processes the ingress address of the multicast/broadcast session #2 may depend on whether the data delivery enabling service entity is deployed.

In a possible implementation, if the data delivery enabling service entity is not deployed, the network resource management entity may directly send the ingress address of the multicast/broadcast session #2 to the application layer service entity. In this case, the ingress address of the multicast/broadcast session #2 may be carried in the multicast/broadcast session create response message #3 in Manner 1 or in the multicast/broadcast session create update message #3 in Manner 2 and Manner 3, or may be carried in any other possible message. This is not limited.

It can be learned that, the network capability exposure function network element can send the ingress address of the multicast/broadcast session #2 to the application network element, so that the application layer service entity in the application network element can accurately send the data of the service to the multicast/broadcast session #2, to ensure that the data of the service can be carried by the multicast/broadcast session #2.

Optionally, the network resource management entity may further send fifth information to the application layer service entity. The fifth information may indicate the application layer service entity to send the data of the service via the multicast/broadcast session #2, to continue to ensure the service. For example, the fifth information may be a user plane delivery mode (user plane delivery mode) switching message, that is, an existing message is reused for implementation to reduce implementation difficulty, or a newly defined message may be used. This is not specifically limited. Correspondingly, the application layer service entity may switch the ingress address based on the fifth information, for example, switch sending the data of the service originally to the ingress address of the multicast/broadcast session #1 to sending the data of the service to the ingress address of the multicast/broadcast session #2.

Switching of the ingress address may be soft switching. For example, the application layer service entity first sends the data of the service to both the ingress address of the multicast/broadcast session #1 and the ingress address of the multicast/broadcast session #2, and after a period of time, the application layer service entity then switches to sending the data of the service only to the ingress address of the multicast/broadcast session #2. Alternatively, switching of the ingress address may be hard switching. For example, the application layer service entity first the data of the service only to the ingress address of the multicast/broadcast session #1, and subsequently, the application layer service entity then switches to sending the data of the service only to the ingress address of the multicast/broadcast session #2.

In another possible implementation, if the data delivery enabling service entity is deployed, the network resource management entity may associate the ingress address of the multicast/broadcast session #2 with the ingress address/user plane address of the data delivery enabling service entity; and may further delete/disable an association between the ingress address of the multicast/broadcast session #1 and the ingress address/user plane address of the data delivery enabling service entity. The network resource management entity may send the ingress address of the multicast/broadcast session #2 to the data delivery enabling service entity, for example, send the association between the ingress address of the multicast/broadcast session #2 and the ingress address/user plane address of the data delivery enabling service entity, to indicate that the data delivery enabling service entity needs to send the data of the service to the ingress address of the multicast/broadcast session #2.

In a third possible design solution, with reference to the method shown in FIG. 9, in the method, the network resource management entity may further send information about the multicast/broadcast session #2, for example, the identifier of the multicast/broadcast session #2, to terminals in the first service area, so that these terminals can join a multicast group of the multicast/broadcast session #2, or receive broadcast of the multicast/broadcast session #2.

For example, the network resource management entity may further send a multicast/broadcast session announcement (MBS session announcement) message to the terminals in the first service area, where the multicast/broadcast session announcement message may carry the information about the multicast/broadcast session #2 and a group identifier of the multicast/broadcast session #2. In this way, the terminal in the first service area may determine, based on the group identifier of the multicast/broadcast session #2, that the terminal is a terminal corresponding to the service, to determine, based on the information about the multicast/broadcast session #2, whether to join the multicast group of the multicast/broadcast session #2, or whether to receive the broadcast of the multicast/broadcast session #2. In addition, the terminal may further send a multicast/broadcast session listening status report (MBS session listening status report) message to the network resource management entity. The multicast/broadcast session listening status report may carry the information about the multicast/broadcast session #2 and an indication information element, to indicate whether the terminal joins the multicast group of the multicast/broadcast session #2, or whether to receive the broadcast of the multicast/broadcast session #2.

It may be understood that, in the method shown in FIG. 9, a function implemented by the network capability exposure function network element may alternatively be implemented by a service function network element, or may be implemented by any possible network element. This is not specifically limited.

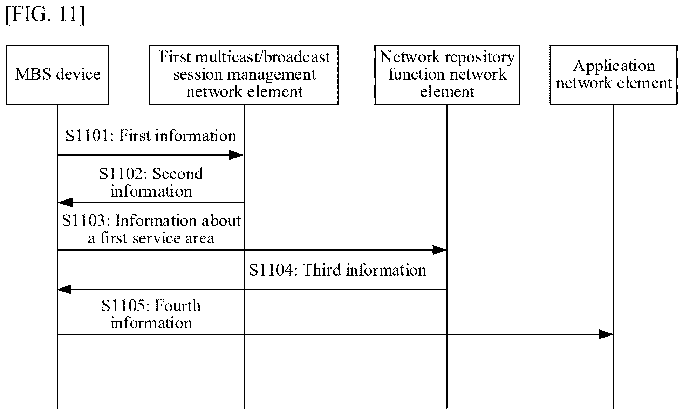

In a fourth possible design solution, with reference to the method shown in FIG. 9, an example in which the multicast/broadcast session is successfully established is used in S903. In practice, the multicast/broadcast session may alternatively fail to be established. In this case, if continuation of establishing the multicast/broadcast session is triggered by the network capability exposure function network element in advance, and the multicast/broadcast session fails to be established, for a related procedure, refer to related descriptions in FIG. 11 below. Details are not described herein. If continuation of establishing the multicast/broadcast session is triggered by the network resource management entity or the application layer service entity in advance, the network resource management entity may further receive sixth information from the network capability exposure function network element, and send seventh information to the application layer service entity based on the sixth information.

The sixth information may be existing information/an existing message, for example, the multicast/broadcast session update response message, and carries an existing information element, for example, the error code, which may be specifically the unknown MBS service area, to indicate that the multicast/broadcast session fails to be established.

For example, the network capability exposure function network element sends the network element discovery request message to the network repository function network element based on the received multicast/broadcast session create request message #2. If the network repository function network element determines that there is the multicast/broadcast session management network element that matches the first service area, for a subsequent procedure, refer to related descriptions of S903. Details are not described herein again. If the network repository function network element determines that there is no multicast/broadcast session management network element that matches the first service area, the network repository function network element sends a discovery response message to the network capability exposure function network element based on this, to indicate that a multicast/broadcast session management network element that matches the first service area is not found. In this way, the network capability exposure function network element may learn that the multicast/broadcast session fails to be established.

Because the network resource management entity or the application layer service entity triggers, in advance, continuation of establishing the multicast/broadcast session for the service, that is, the network resource management entity or the application layer service entity is upgraded, while the network capability exposure function network element is not upgraded, the network capability exposure function network element has no capability to determine a reason of two consecutive failures (a failure to update the service area and a failure to continue establishment of the service). For example, a network covering the first service area does not support multicast/broadcast. Therefore, the network capability exposure function network element may send the existing message, namely, the sixth information, to the application network element.

The seventh information may be new information/a new message, or may be existing information/an existing message, to trigger establishing a unicast session for the service.

For example, if the network resource management entity triggers, in advance, continuation of establishing the multicast/broadcast session for the service, that is, the network resource management entity is upgraded, the network resource management entity may determine, based on the sixth information, the reason of the two consecutive failures. For example, the network covering the first service area does not support the multicast/broadcast. In this case, the seventh information sent by the network resource management entity to the application layer service entity may be the new message, to indicate, based on a new message type, that the network covering the first service area does not support the multicast/broadcast, or may be the existing message, such as the user plane delivery mode switching/notification message, or a multicast/broadcast resource event notification message, but carries a new information element, to indicate, based on the newly defined information element, that the network covering the first service area does not support the multicast/broadcast. In this way, the application layer service entity may determine, based on the seventh information, that the network covering the first service area does not support the multicast/broadcast, to establish the unicast session for the service.

If the application layer service entity triggers, in advance, continuation of establishing the multicast/broadcast session for the service, that is, the application layer service entity is upgraded, while the network resource management entity is not upgraded, after receiving the sixth information, the network resource management entity has no capability to determine the reason of the two consecutive failures. Therefore, the network capability exposure function network element may send the existing message, namely, the seventh information, to the application network element. In this way, the application layer service entity may determine, based on the seventh information, the reason of the two consecutive failures, to establish the unicast session for the service.

It may be understood that, with reference to FIG. 9, the foregoing describes a case in which the network resource management entity or the application layer service entity may still continue to ensure, when the network resource management entity or the application layer service entity fails to trigger continuation of establishing the multicast/broadcast session, the service by establishing the unicast session. With reference to FIG. 11, the following describes how the network capability exposure function network element continues to ensure the service when the network capability exposure function network element fails to trigger continuation of establishing the multicast/broadcast session.

FIG. 11 is a schematic flowchart 2 of a communication method according to an embodiment of this application. The communication method is applicable to the foregoing communication system, and mainly relates to interaction between a network capability exposure function network element, a first multicast/broadcast session management network element, a network repository function network element, and an application network element.

Specifically, as shown in FIG. 11, a procedure of the communication method is as follows.

S1101: The network capability exposure function network element sends first information to the first multicast/broadcast session management network element.

S1102: The network capability exposure function network element receives second information from the first multicast/broadcast session management network element.

The first information is for requesting to update an MBS service area to a first service area, and the second information indicates that update of the MBS service area fails. For a specific implementation principle, refer to related descriptions of S901 and S902. Details are not described herein again.

It may be understood that, similar to S903, when the update of the MBS service area fails, both the network capability exposure function network element and the application network element may trigger establishing a multicast/broadcast session for a service. In this case, regardless of which network element or entity triggers continuation of establishing the multicast/broadcast session for the service, the network capability exposure function network element ultimately needs to determine whether a multicast/broadcast session management network element that matches the first service area can be discovered, that is, S1403 and S1404 are to be performed.

S1103: The network capability exposure function network element sends information about the first service area to the network repository function network element.

The information about the first service area may be carried in a network element discovery request message, and is used by the network repository function network element to discover the multicast/broadcast session management network element that matches the first service area.

S1104: The network capability exposure function network element receives third information from the network repository function network element.

The third information may indicate that a multicast/broadcast session management network element that matches the first service area is not found, for example, carries an undiscovered network element (NF not found), to indicate that a network element that meets a condition cannot be found, in other words, the multicast/broadcast session management network element that matches the first service area cannot be found. The third information may be an existing message/an existing message, for example, a network element discovery response message, or may be a new message.

For specific implementation principles of S1103 and S1104, refer to related descriptions of FIG. 9. Details are not described herein again.

S1105: The network capability exposure function network element sends fourth information to the application network element.

The fourth information may be new information/a new message, or may be existing information/an existing message, to trigger establishing a unicast session for the service.

Because the network capability exposure function network element is upgraded, the network capability exposure function network element may determine that a reason of two consecutive failures (a failure to update the service area and a failure to continue establishment of the service) is that a network covering the first service area does not support multicast/broadcast. In this case, the network capability exposure function network element may send the new fourth information to the application network element. For example, the fourth information is a newly defined message, to indicate, based on a new message type, that the network covering the first service area does not support the multicast/broadcast. In this way, the application network element is triggered to establish the unicast session for the service. For another example, the fourth information is the existing message, for example, a multicast/broadcast session update response message or a multicast/broadcast event notification message, but may carry a newly defined information element, to indicate, based on the newly defined information element, that the network covering the first service area does not support the multicast/broadcast. In this way, the application network element is triggered to establish the unicast session for the service.

In conclusion, when the MBS service area fails to be updated from a second service area to the first service area, an MBS device may further trigger continuation of establishing the multicast/broadcast session for the service. If continuation of establishing the multicast/broadcast session for the service still fails, it indicates that the network covering the network element of the first service area may not support the multicast/broadcast. Therefore, the unicast session needs to be established, to continue to ensure the service.

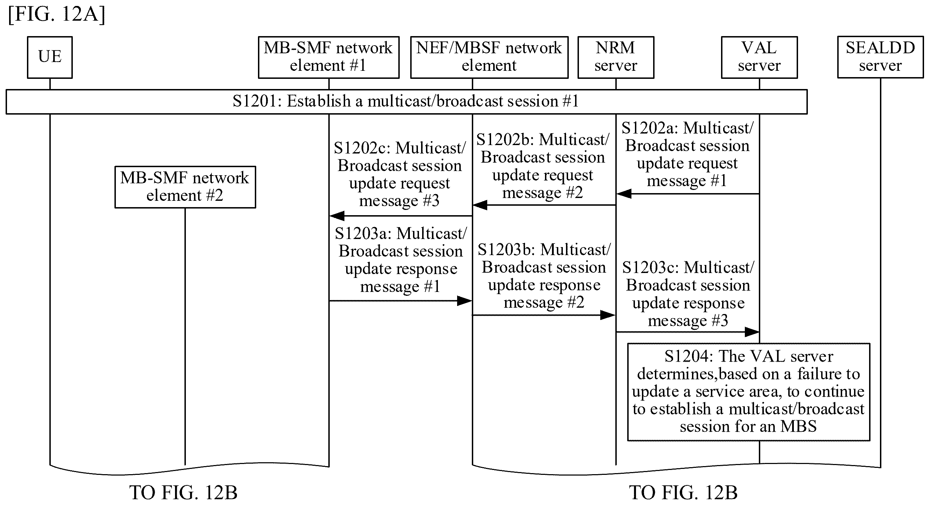

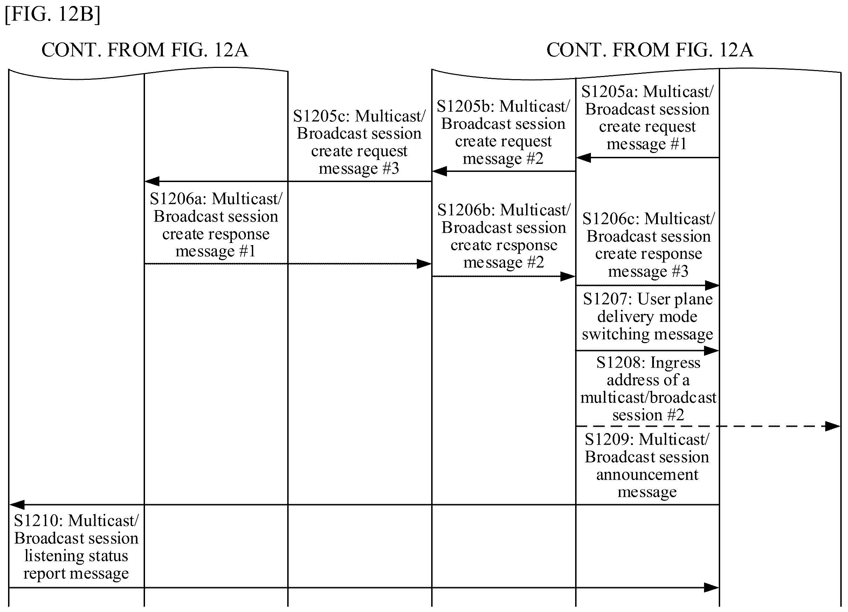

The foregoing describes in detail an overall procedure of the communication method provided in embodiments of this application with reference to FIG. 9 and FIG. 11. The following specifically describes a specific procedure of the communication method with reference to FIG. 12A and FIG. 12B to FIG. 17.

FIG. 12A and FIG. 12B are a schematic flowchart 2 of a communication method according to an embodiment of this application. The communication method is applicable to the foregoing communication system, and mainly relates to interaction between a UE (terminal), an MB-UPF network element #1 (a first multicast/broadcast user plane network element), an MB-UPF network element #2 (a second multicast/broadcast user plane network element), an MB-SMF network element #1 (a first multicast/broadcast session management network element), an MB-SMF network element #2 (a second multicast/broadcast session management network element), a NEF network element/an MBSF network element (a network capability exposure function network element), an NRM server (a network resource management entity), and a VAL server (an application layer service entity). In this case, continuation of establishing a multicast/broadcast session for an MBS may be triggered by the VAL server.

Specifically, as shown in FIG. 12A and FIG. 12B, a procedure of the communication method is as follows.

S1201: Establish a multicast/broadcast session #1.

The VAL server establishes, via the NRM server, the multicast/broadcast session #1 whose session type is a multicast or a broadcast on a network side. An ingress address of the multicast/broadcast session #1 is an address of the MB-UPF network element #1. An MBS service area of the multicast/broadcast session is a second service area, and there may be at least one UE located in the second service area, or there may be no UE located in the second service area. This is not limited. When the session type of the multicast/broadcast session #1 is the multicast, there may be at least one UE having joined a multicast group of the multicast/broadcast session #1, or there may be no UE joining the multicast group of the multicast/broadcast session #1. This is not limited either. In addition, in a process of establishing the multicast/broadcast session #1, the NEF network element/MBSF network element may further record a serving MB-SMF network element of the multicast/broadcast session #1, for example, the MB-SMF network element #1.

Optionally, in the process of establishing the multicast/broadcast session #1, if a SEALDD server is deployed, the NRM server may further send an address of the SEALDD server to the VAL server. In addition, when the NRM server and the SEALDD server are separately deployed, the NRM server may further send the ingress address of the multicast/broadcast session #1 to the SEALDD server, and optionally, may further send a stream descriptor of the VAL server.

It may be understood that, for a specific implementation principle of S1201, refer to related descriptions of S901. Details are not described herein again.

S1202a: The VAL server sends a multicast/broadcast session update request message #1 to the NRM server.

S1202b: The NRM server sends a multicast/broadcast session update request message #2 to the NEF network element/MBSF network element.

S1202c: The NEF network element/MBSF network element sends a multicast/broadcast session update request message #3 to the MB-SMF network element #1.

The multicast/broadcast session update request message #1, the multicast/broadcast session update request message #2, and the multicast/broadcast session update request message #3 may all carry an identifier of the multicast/broadcast session #1 and an identifier of the MBS service area, to request to update the MBS service area from the second service area to a first service area. For specific implementation principles of S1202a to S1202c, refer to the related descriptions of S901. Details are not described herein again.

S1203a: The MB-SMF network element #1 sends a multicast/broadcast session update response message #1 to the NEF network element/MBSF network element.

S1203b: The NEF network element/MBSF network element sends a multicast/broadcast session update response message #2 to the NRM server.

S1203c: The NRM server sends a multicast/broadcast session update response message #3 to the VAL server.

The multicast/broadcast session update response message #1, the multicast/broadcast session update response message #2, and the multicast/broadcast session update response message #3 may all carry an error code, to indicate that the update of the service area fails. For specific implementation principles of S1203a to S1203c, refer to related descriptions of S902. Details are not described herein again.

S1204: The VAL server determines, based on a failure to update the service area, to continue establishment of the multicast/broadcast session for the MBS.

S1205a: The VAL server sends a multicast/broadcast session create request message #1 to the NRM server.

S1205b: The NRM server sends a multicast/broadcast session create request message #2 to the NEF network element/MBSF network element.

S1205c: The NEF network element/MBSF network element sends a multicast/broadcast session create request message #3 to the MB-SMF network element #2.

The multicast/broadcast session create request message #1, the multicast/broadcast session create request message #2, and the multicast/broadcast session create request message #3 may all carry information about the first service area, to trigger establishing a multicast/broadcast session that serves the first service area and that is for the MBS.

In S1205c, the NEF network element/MBSF network element may further discover, based on the first service area, the MB-SMF network element #2 that can serve the first service area. In addition, for specific implementation principles of S1204 to S1205c, refer to related descriptions in Manner 1 of S903. Details are not described herein again.

S1206a: The MB-SMF network element #2 sends a multicast/broadcast session create response message #1 to the NEF network element/MBSF network element.

S1206b: The NEF network element/MBSF network element sends a multicast/broadcast session create response message #2 to the NRM server.

S1206c: The NRM server sends a multicast/broadcast session create response message #3 to the VAL server.

The multicast/broadcast session create response message #1, the multicast/broadcast session create response message #2, and the multicast/broadcast session create response message #3 may all carry an identifier of a multicast/broadcast session #2, to indicate that the multicast/broadcast session #2 is successfully established. For specific implementation principles of S 1206a to S 1206c, refer to related descriptions of the foregoing first possible design solution. Details are not described herein again.

In addition, an ingress address of the multicast/broadcast session #2 is an address of the MB-UPF network element #2. The multicast/broadcast session create response message #1, the multicast/broadcast session create response message #2, and the multicast/broadcast session create response message #3 may further carry the ingress address of the multicast/broadcast session #2. For a specific implementation principle, refer to related descriptions of the foregoing second possible design solution. Details are not described herein again.

S1207: The NRM server sends a user plane delivery mode switching message to the VAL server.

S1208: The NRM server sends the ingress address of the multicast/broadcast session #2 to the SEALDD server.

S1207 and S1208 may be in an "or" relationship. For specific implementation principles, refer to the related descriptions of the foregoing second possible design solution. Details are not described herein again.

S1209: The VAL server sends a multicast/broadcast session announcement message to the UE.

S1210: The VAL server receives an MBS session listening status report message from the UE.

The UE may be a UE located in the first service area. An execution sequence of S1209 and S1210 and S1207 or an execution sequence of S1209 and S1210 and S1208 is not limited. In addition, specific implementation principles of S1209 and S1210 are similar to that of the foregoing third possible design solution. Reference may be made for understanding. Details are not described herein again.

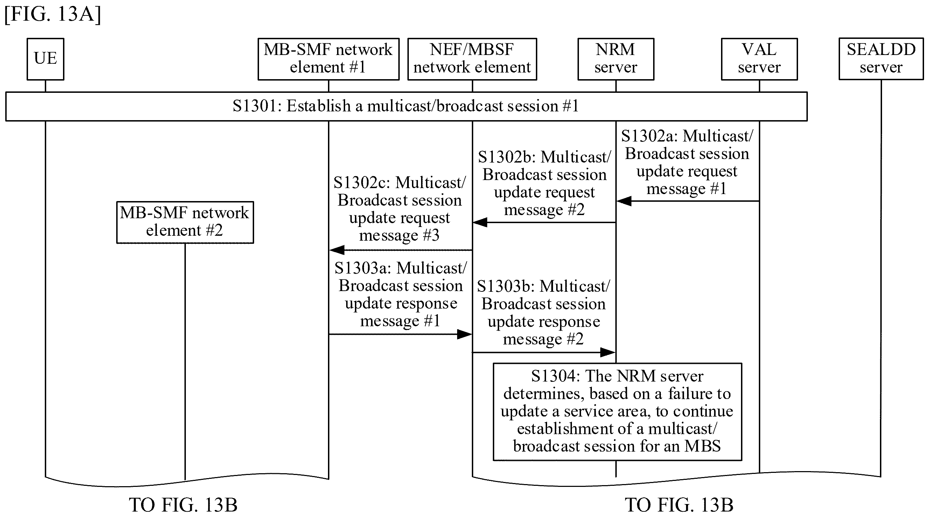

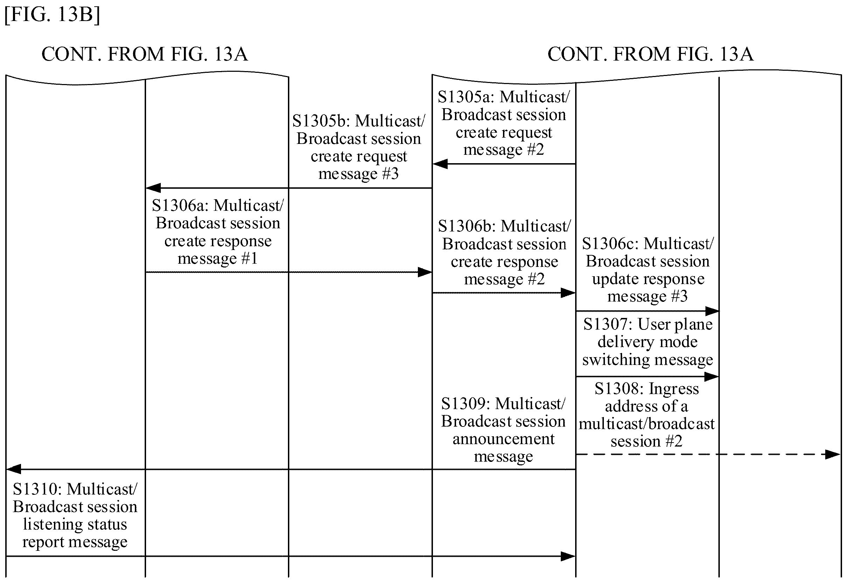

FIG. 13A and FIG. 13B are a schematic flowchart 3 of a communication method according to an embodiment of this application. The communication method is applicable to the foregoing communication system, and mainly relates to interaction between a UE (terminal), an MB-UPF network element #1 (a first multicast/broadcast user plane network element), an MB-UPF network element #2 (a second multicast/broadcast user plane network element), an MB-SMF network element #1 (a first multicast/broadcast session management network element), an MB-SMF network element #2 (a second multicast/broadcast session management network element), a NEF network element/an MBSF network element (a network capability exposure function network element), an NRM server (a network resource management entity), and a VAL server (an application layer service entity). In this case, continuation of establishing a multicast/broadcast session for an MBS may be triggered by the NRM server.

Specifically, as shown in FIG. 13A and FIG. 13B, a procedure of the communication method is as follows.

S1301: Establish a multicast/broadcast session #1.

It may be understood that, for a specific implementation principle of S1301, refer to related descriptions of S1201. Details are not described herein again.

S1302a: The VAL server sends a multicast/broadcast session update request message #1 to the NRM server.

S1302b: The NRM server sends a multicast/broadcast session update request message #2 to the NEF network element/MBSF network element.

S1302c: The NEF network element/MBSF network element sends a multicast/broadcast session update request message #3 to the MB-SMF network element #1.

Similar to that of S1202a to S1202c, specific implementation principles of S1302a to S1302c may refer to related descriptions of S901. Details are not described herein again.

S1303a: The MB-SMF network element #1 sends a multicast/broadcast session update response message #1 to the NEF network element/MBSF network element.

S1303b: The NEF network element/MBSF network element sends a multicast/broadcast session update response message #2 to the NRM server.

Because continuation of establishing the multicast/broadcast session for the MBS is triggered by the NRM server, the NRM server may not send a multicast/broadcast session update response message #3 to the VAL server at this occasion. In addition, for specific implementation principles of S1303a and S1303b, refer to related descriptions of S902. Details are not described herein again.

S1304: The NEF network element/MBSF network element determines, based on a failure to update a service area, to continue establishment of the multicast/broadcast session for the MBS.

S1305a: The NRM server sends a multicast/broadcast session create request message #2 to the NEF network element/MBSF network element.

S1305b: The NEF network element/MBSF network element sends a multicast/broadcast session create request message #3 to the MB-SMF network element #2.

For specific implementation principles of S1304 to S1305b, refer to related descriptions of S903. Details are not described herein again.

S1306a: The MB-SMF network element #2 sends a multicast/broadcast session create response message #1 to the NEF network element/MBSF network element.

S1306b: The NEF network element/MBSF network element sends a multicast/broadcast session create response message #2 to the NRM server.

S1306c: The NRM server sends a multicast/broadcast session update response message #3 to the VAL server.

The multicast/broadcast session create response message #1, the multicast/broadcast session create response message #2, and the multicast/broadcast session update response message #3 may all carry an identifier of a multicast/broadcast session #2, to indicate that the multicast/broadcast session #2 is successfully established. For specific implementation principles of S1306a to S1306c, refer to related descriptions of the foregoing first possible design solution. Details are not described herein again.

S1307: The NRM server sends a user plane delivery mode switching message to the VAL server.

S1308: The NRM server sends an ingress address of the multicast/broadcast session #2 to a SEALDD server.

S1307 and S1308 may be in an "or" relationship. For specific implementation principles, refer to related descriptions of the foregoing second possible design solution. Details are not described herein again.

S1309: The NRM server sends a multicast/broadcast session announcement message to the UE.

S1310: The NRM server receives an MBS session listening status report message from the UE.

The UE may be a UE located in a first service area. An execution sequence of S1309 and S1310 and S1307 or an execution sequence of S1309 and S1310 and S1308 is not limited. In addition, for specific implementation principles of S1309 and S1310, refer to related descriptions of the foregoing third possible design solution. Details are not described herein again.

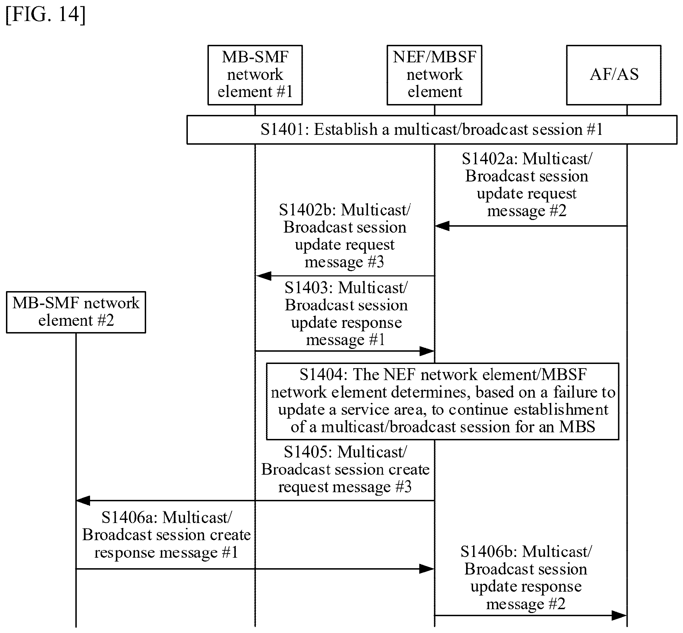

FIG. 14 is a schematic flowchart 4 of a communication method according to an embodiment of this application. The communication method is applicable to the foregoing communication system, and mainly relates to interaction between a UE (terminal), an MB-UPF network element #1 (a first multicast/broadcast user plane network element), an MB-UPF network element #2 (a second multicast/broadcast user plane network element), an MB-SMF network element #1 (a first multicast/broadcast session management network element), an MB-SMF network element #2 (a second multicast/broadcast session management network element), a NEF network element/an MBSF network element (a network capability exposure function network element), and an AF/AS (application network element). In this case, continuation of establishing a multicast/broadcast session for an MBS may be triggered by the NEF network element/MBSF network element.

Specifically, as shown in FIG. 14, a procedure of the communication method is as follows.

S1401: Establish a multicast/broadcast session #1.

It may be understood that, for a specific implementation principle of S1401, refer to related descriptions of S1201. Details are not described herein again.

S1402a: The AF/AS sends a multicast/broadcast session update request message #2 to the NEF network element/MBSF network element.

S1402b: The NEF network element/MBSF network element sends a multicast/broadcast session update request message #3 to the MB-SMF network element #1.

Similar to that of S1202a to S1202c, specific implementation principles of S1402a and S1402b may refer to related descriptions of S901. Details are not described herein again.

S1403: The MB-SMF network element #1 sends a multicast/broadcast session update response message #1 to the NEF network element/MBSF network element.

Because continuation of establishing the multicast/broadcast session for the MBS is triggered by the NEF network element/MBSF network element, the NEF network element/MBSF network element may not send a multicast/broadcast session update response message #2 to the AF/AS at this occasion. In addition, for a specific implementation principle of S1403, refer to related descriptions of S902. Details are not described herein again.

S1404: The NEF network element/MBSF network element determines, based on a failure to update a service area, to continue establishment of the multicast/broadcast session for the MBS.

S1405: The NEF network element/MBSF network element sends a multicast/broadcast session create request message #3 to the MB-SMF network element #2.

For specific implementation principles of S1404 and S1405, refer to related descriptions of S903. Details are not described herein again.

S1406a: The MB-SMF network element #2 sends a multicast/broadcast session create response message #1 to the NEF network element/MBSF network element.

S1406b: The NEF network element/MBSF network element sends a multicast/broadcast session update response message #2 to the AF/AS.

Both the multicast/broadcast session create response message #1 and the multicast/broadcast session update response message #2 may carry an identifier of a multicast/broadcast session #2, to indicate that the multicast/broadcast session #2 is successfully established. For specific implementation principles of S1406a and S1406b, refer to related descriptions of the foregoing first possible design solution. Details are not described herein again.

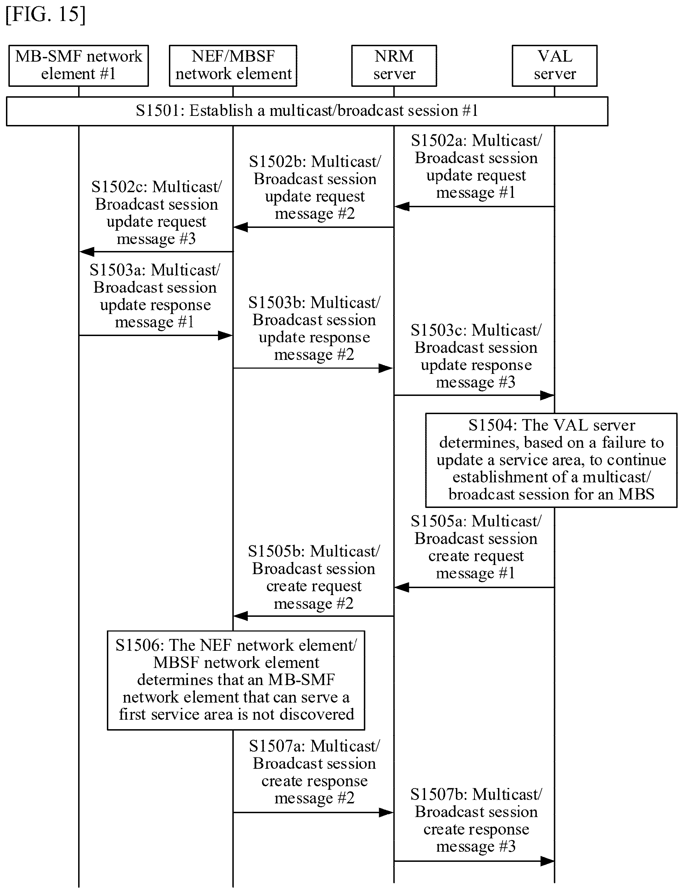

FIG. 15 is a schematic flowchart 6 of a communication method according to an embodiment of this application. The communication method is applicable to the foregoing communication system, and mainly relates to interaction between a NEF network element/an MBSF network element (a network capability exposure function network element), an NRM server (a network resource management entity), and a VAL server (an application layer service entity). In this case, continuation of establishing a multicast/broadcast session for an MBS may be triggered by the VAL server.

Specifically, as shown in FIG. 15, a procedure of the communication method is as follows.

S1501: Establish a multicast/broadcast session #1.

It may be understood that, for a specific implementation principle of S1501, refer to related descriptions of S1201. Details are not described herein again.

S1502a: The VAL server sends a multicast/broadcast session update request message #1 to the NRM server.

S1502b: The NRM server sends a multicast/broadcast session update request message #2 to the NEF network element/MBSF network element.

S1502c: The NEF network element/MBSF network element sends a multicast/broadcast session update request message #3 to an MB-SMF network element #1.

The multicast/broadcast session update request message #1, the multicast/broadcast session update request message #2, and the multicast/broadcast session update request message #3 may all carry an identifier of the multicast/broadcast session #1 and an identifier of an MBS service area, to request to update the MBS service area from a second service area to a first service area. For specific implementation principles of S1502a to S1502c, refer to related descriptions of S901. Details are not described herein again.

S1503a: The MB-SMF network element #1 sends a multicast/broadcast session update response message #1 to the NEF network element/MBSF network element.

S1503b: The NEF network element/MBSF network element sends a multicast/broadcast session update response message #2 to the NRM server.

S1503c: The NRM server sends a multicast/broadcast session update response message #3 to the VAL server.

The multicast/broadcast session update response message #1, the multicast/broadcast session update response message #2, and the multicast/broadcast session update response message #3 may all carry an error code, to indicate that the update of the service area fails. For specific implementation principles of S1503a to S1503c, refer to related descriptions of S902. Details are not described herein again.

S1504: The VAL server determines, based on a failure to update the service area, to continue establishment of the multicast/broadcast session for the MBS.

S1505a: The VAL server sends a multicast/broadcast session create request message #1 to the NRM server.

S1505b: The NRM server sends a multicast/broadcast session create request message #2 to the NEF network element/MBSF network element.

Both the multicast/broadcast session create request message #1 and the multicast/broadcast session create request message #2 may carry information about the first service area, to trigger establishing a multicast/broadcast session that serves the first service area and that is for the MBS.

S1506: The NEF network element/MBSF network element determines that an MB-SMF network element that can serve the first service area is not discovered.

For specific implementation principles of S1505a to S1506, refer to related descriptions of S1403 and S1404. Details are not described herein again.

S1507a: The NEF network element/MBSF network element sends a multicast/broadcast session create response message #2 to the NRM server.

S1507b: The NRM server sends a multicast/broadcast session create response message #3 to the VAL server.

It may be understood that, because neither of the NEF network element/MBSF network element nor the NRM server is upgraded, both the multicast/broadcast session create response message #2 and the multicast/broadcast session create response message #3 may carry an existing information element, for example, the error code, to indicate an unknown MBS service area. However, because the VAL server is upgraded, the VAL server may still determine, based on both the multicast/broadcast session update response message #3 and the multicast/broadcast session create response message #3 carrying the error code, that a second failure is because the first service area does not support multicast/broadcast, to trigger establishing a unicast session for the MBS.

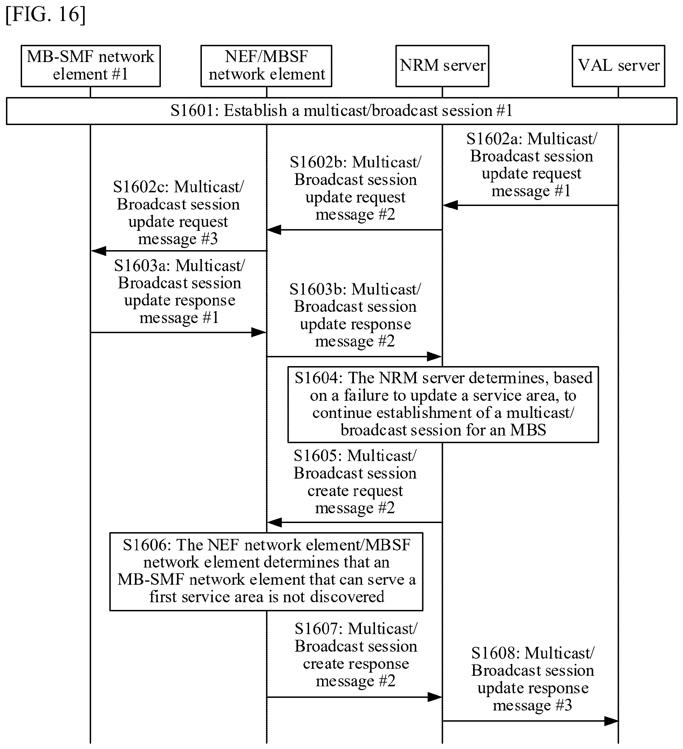

FIG. 16 is a schematic flowchart 7 of a communication method according to an embodiment of this application. The communication method is applicable to the foregoing communication system, and mainly relates to interaction between a NEF network element/an MBSF network element (a network capability exposure function network element), an NRM server (a network resource management entity), and a VAL server (an application layer service entity). In this case, continuation of establishing a multicast/broadcast session for an MBS may be triggered by the NRM server.

Specifically, as shown in FIG. 16, a procedure of the communication method is as follows.

S1601: Establish a multicast/broadcast session #1.

It may be understood that, for a specific implementation principle of S1601, refer to related descriptions of S1201. Details are not described herein again.

S1602a: The VAL server sends a multicast/broadcast session update request message #1 to the NRM server.

S1602b: The NRM server sends a multicast/broadcast session update request message #2 to the NEF network element/MBSF network element.

S1602c: The NEF network element/MBSF network element sends a multicast/broadcast session update request message #3 to an MB-SMF network element #1.

Similar to that of S1202a to S1202c, specific implementation principles of S1602a to S1602c may refer to related descriptions of S901. Details are not described herein again.

S1603a: The MB-SMF network element #1 sends a multicast/broadcast session update response message #1 to the NEF network element/MBSF network element.

S1603b: The NEF network element/MBSF network element sends a multicast/broadcast session update response message #2 to the NRM server.

Because continuation of establishing the multicast/broadcast session for the MBS is triggered by the NRM server, the NRM server may not send a multicast/broadcast session update response message #3 to the VAL server at this occasion. In addition, for specific implementation principles of S1603a and S1603b, refer to related descriptions of S902. Details are not described herein again.

S1604: The NEF network element/MBSF network element determines, based on a failure to update a service area, to continue establishment of the multicast/broadcast session for the MBS.

S1605: The NRM server sends a multicast/broadcast session create request message #2 to the NEF network element/MBSF network element.

S1606: The NEF network element/MBSF network element determines that an MB-SMF network element that can serve a first service area is not discovered.

For specific implementation principles of S1605 and S1506, refer to related descriptions of S1403 and S1404. Details are not described herein again.

S1607: The NEF network element/MBSF network element sends a multicast/broadcast session create response message #2 to the NRM server.

It may be understood that, because the NEF network element/MBSF network element is not upgraded, the multicast/broadcast session create response message #2 may carry an existing information element, for example, an error code, to indicate an unknown MBS service area.

S1608: The NRM server sends a multicast/broadcast session update response message #3 to the VAL server.

It may be understood that, because the NRM server is upgraded, the NRM server may still determine, based on both the multicast/broadcast session update response message #2 and the multicast/broadcast session create response message #2 carrying the error code, that a second failure is because the first service area does not support multicast/broadcast. In this way, the multicast/broadcast session update response message #3 sent by the NRM server to the VAL server may carry a new information element, to indicate that the first service area does not support the multicast/broadcast, to trigger establishing a unicast session for the MBS.

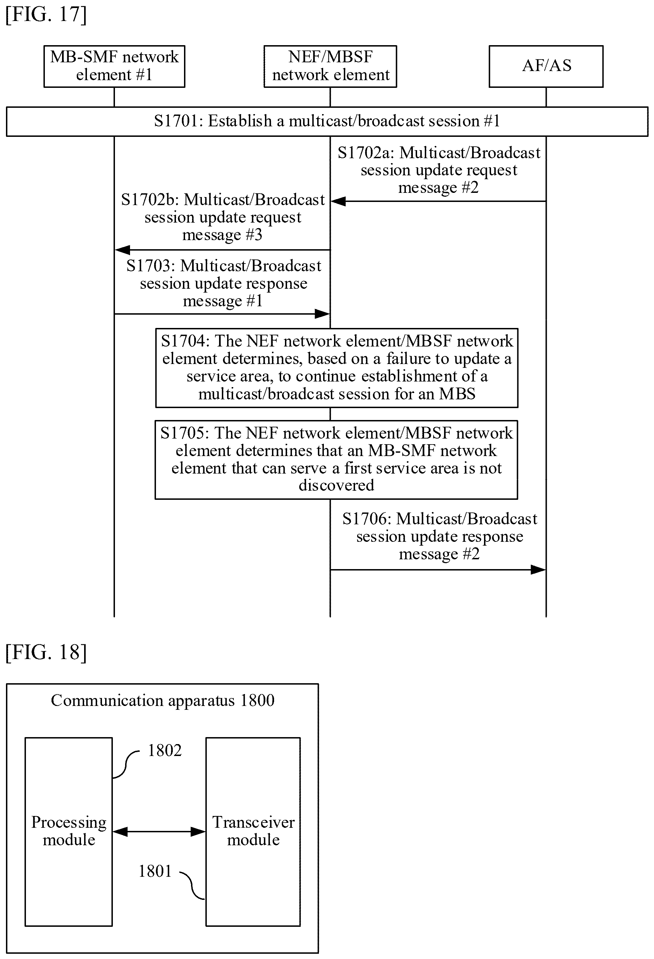

FIG. 17 is a schematic flowchart 8 of a communication method according to an embodiment of this application. The communication method is applicable to the foregoing communication system, and mainly relates to interaction between a NEF network element/an MBSF network element (a network capability exposure function network element) and an AF/AS (application network element). In this case, continuation of establishing a multicast/broadcast session for an MBS may be triggered by the NEF network element/MBSF network element.

Specifically, as shown in FIG. 17, a procedure of the communication method is as follows.

S1701: Establish a multicast/broadcast session #1.

It may be understood that, for a specific implementation principle of S1701, refer to related descriptions of S1201. Details are not described herein again.

S1702a: The AF/AS sends a multicast/broadcast session update request message #2 to the NEF network element/MBSF network element.

S1702b: The NEF network element/MBSF network element sends a multicast/broadcast session update request message #3 to an MB-SMF network element #1.

Similar to that of S1202a to S1202c, specific implementation principles of S1702a and S1702b may refer to related descriptions of S901. Details are not described herein again.

S1703: The MB-SMF network element #1 sends a multicast/broadcast session update response message #1 to the NEF network element/MBSF network element.

Because continuation of establishing the multicast/broadcast session for the MBS is triggered by the NEF network element/MBSF network element, the NEF network element/MBSF network element may not send a multicast/broadcast session update response message #2 to the AF/AS at this occasion. In addition, for specific implementation principles of S1703a and S1703b, refer to related descriptions of S902. Details are not described herein again.

S1704: The NEF network element/MBSF network element determines, based on a failure to update a service area, to continue establishment of the multicast/broadcast session for the MBS.

S1705: The NEF network element/MBSF network element determines that an MB-SMF network element that can serve a first service area is not discovered.

For a specific implementation principle of S1705, refer to related descriptions of S1403 and S 1404. Details are not described herein again.

S1706: The NEF network element/MBSF network element sends the multicast/broadcast session update response message #2 to the AF/AS.

It may be understood that, because the NEF network element/MBSF network element is not upgraded, the multicast/broadcast session update response message #2 may carry a new information element, to indicate that the first service area does not support multicast/broadcast, to trigger establishing a unicast session for the MBS.

The foregoing describes in detail the communication method provided in embodiments of this application with reference to FIG. 10 to FIG. 15. With reference to FIG. 16 and FIG. 17, the following describes in detail a communication apparatus configured to perform the communication method provided in embodiments of this application.

FIG. 18 is a diagram 1 of a structure of a communication apparatus according to an embodiment of this application. For example, as shown in FIG. 18, the communication apparatus 1800 includes a transceiver module 1801 and a processing module 1802. For ease of description, FIG. 18 shows only main parts of the communication apparatus.

The communication apparatus 1800 may be used in the communication system shown in FIG. 9, to perform a function of the MBS device or the network capability exposure function network element in the foregoing methods. For example, the transceiver module 1801 is configured to perform sending and receiving functions of the communication apparatus 1800, for example, perform S901, S902, S1101, S1102, S1305a, and S1306b, and the processing module 1802 is configured to perform a function of the communication apparatus 1800 other than the sending and receiving functions, for example, perform S903, S1204, and S1304.

Optionally, the transceiver module 1801 may include a sending module (not shown in FIG. 18) and a receiving module (not shown in FIG. 18). The sending module is configured to implement the sending function of the communication apparatus 1800, and the receiving module is configured to implement the receiving function of the communication apparatus 1800.

Optionally, the communication apparatus 1800 may further include a storage module (not shown in FIG. 18). The storage module stores a program or instructions. When the processing module 1802 executes the program or the instructions, the communication apparatus 1800 is enabled to perform functions of the foregoing methods.

It may be understood that, the communication apparatus 1800 may be a network device, a chip (system) or another part or component that may be disposed in the network device, or an apparatus including the network device. This is not limited in this application. In addition, for technical effects of the communication apparatus 1800, refer to technical effects of the communication methods shown in FIG. 9 to FIG. 17. Details are not described herein again.

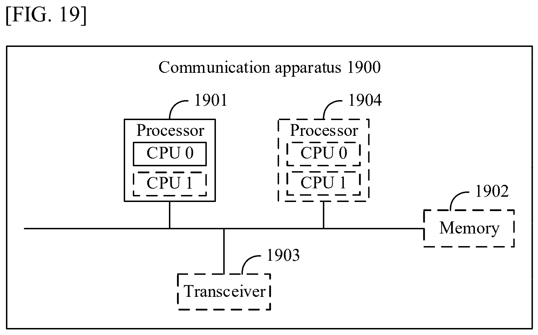

FIG. 19 is a diagram 2 of a structure of a communication apparatus according to an embodiment of this application. For example, the communication apparatus may be a network device or a chip (system) or another part or component that may be disposed in the network device. As shown in FIG. 19, the communication apparatus 1900 may include a processor 1901. Optionally, the communication apparatus 1900 may further include a memory 1902 and/or a transceiver 1903. The processor 1901 is coupled to the memory 1902 and the transceiver 1903, for example, may be connected through a communication bus.

The following specifically describes composition parts of the communication apparatus 1900 with reference to FIG. 19.

The processor 1901 is a control center of the communication apparatus 1900, and may be a processor, or may be a generic term of a plurality of processing elements. For example, the processor 1901 is one or more central processing units (central processing units, CPUs) or an application-specific integrated circuit (application-specific integrated circuit, ASIC), or is configured as one or more integrated circuits for implementing embodiments of this application, such as one or more microprocessors (digital signal processors, DSPs) or one or more field programmable gate arrays (field programmable gate arrays, FPGAs).

Optionally, the processor 1901 may perform various functions of the communication apparatus 1900 by running or executing a software program stored in the memory 1902 and invoking data stored in the memory 1902, for example, perform the communication methods shown in FIG. 9 to FIG. 17.

During specific implementation, in an embodiment, the processor 1901 may include one or more CPUs, such as a CPU 0 and a CPU 1 shown in FIG. 19.

During specific implementation, in an embodiment, the communication apparatus 1900 may alternatively include a plurality of processors, such as the processor 1901 and a processor 1904 shown in FIG. 19. Each of the processors may be a single-core processor (single-CPU), or may be a multi-core processor (multi-CPU). The processor herein may be one or more devices, circuits, and/or processing cores configured to process data (for example, computer program instructions).

The memory 1902 is configured to store a software program for executing the solutions of this application, and the processor 1901 controls execution of the software program. For a specific implementation, refer to the foregoing method embodiments. Details are not described herein again.

Optionally, the memory 1902 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that is accessible by a computer. However, this is not limited thereto. The memory 1902 may be integrated with the processor 1901, or may exist independently and is coupled to the processor 1901 through an interface circuit (not shown in FIG. 19) of the communication apparatus 1900. This is not specifically limited in this embodiment of this application.

The transceiver 1903 is configured to communicate with another communication apparatus. For example, the communication apparatus 1900 is a terminal, and the transceiver 1903 may be configured to communicate with a network device or communicate with another terminal device. For another example, the communication apparatus 1900 is a network device, and the transceiver 1903 may be configured to communicate with a terminal or communicate with another network device.

Optionally, the transceiver 1903 may include a receiver and a transmitter (not separately shown in FIG. 19). The receiver is configured to implement a receiving function, and the transmitter is configured to implement a sending function.

Optionally, the transceiver 1903 may be integrated with the processor 1901, or may exist independently and is coupled to the processor 1901 through an interface circuit (not shown in FIG. 19) of the communication apparatus 1900. This is not specifically limited in this embodiment of this application.

It may be understood that, a structure of the communication apparatus 1900 shown in FIG. 19 does not constitute a limitation on the communication apparatus. An actual communication apparatus may include more or fewer parts than those shown in the figure, or combine some parts, or have different part arrangement.

In addition, for technical effects of the communication apparatus 1900, refer to technical effects of the methods described in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that, the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative descriptions, many forms of random access memories (random access memories, RAMs) may be used, such as a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware (for example, a circuit), firmware, or any combination thereof. When software is for implementing the embodiments, all or a part of the embodiments may be implemented in a form of a computer program product. The computer program product includes one or more computer instructions or computer programs. When the computer instructions or the computer programs are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with examples described in embodiments disclosed in this specification, units and algorithm steps may be implemented by electronic hardware or a combination of computer software and electronic hardware. Whether the functions are performed in a hardware or software manner depends on particular applications and design constraints of the technical solutions. A person skilled in the art may use different methods to implement the described functions for each particular application, but it should not be considered that such an implementation goes beyond the scope of this application. It may be clearly understood by a person skilled in the art that, for the purpose of convenient and brief description, for a specific working process of the foregoing systems, apparatuses, and units, refer to a corresponding process in the foregoing method embodiments. Details are not described herein again.

In several embodiments provided in this application, it should be understood that the disclosed systems, apparatuses, and methods may be implemented in other manners. For example, the apparatus embodiments described above are merely examples. For example, division of the units is merely logical function division, and there may be another division manner during actual implementation. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or units may be implemented in electronic, mechanical, or other forms.

Units described as separate parts may or may not be physically separate, and parts displayed as units may or may not be physical units, to be specific, may be located at one location, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc. The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by a multicast/broadcast service MBS device, first information to a first multicast/broadcast session management network element, wherein the first information is for requesting to update an MBS service area to a first service area, and the MBS service area is a service area of a service;
receiving, by the MBS device, second information from the first multicast/broadcast session management network element, wherein the second information indicates that update of the MBS service area fails; and
sending, by the MBS device, third information based on the second information, wherein the third information comprises information about the first service area, and the third information is for triggering establishing a multicast/broadcast session for the service.

2. The method according to claim 1, wherein the MBS device is a network resource management entity, and the sending the third information comprises:
sending, by the network resource management entity, the third information to a network capability exposure function network element.

3. The method according to claim 2, wherein the method further comprises:
receiving, by the network resource management entity, fourth information from the network capability exposure function network element, wherein the fourth information indicates that establishment of the multicast/broadcast session succeeds.

4. The method according to claim 3, wherein the third information is a multicast/broadcast session create request message, and the fourth information is a multicast/broadcast session create response message.

5. The method according to any one of claims 2 to 4, wherein the method further comprises:
sending, by the network resource management entity, information about the multicast/broadcast session to terminals in the first service area.

6. The method according to any one of claims 2 to 5, wherein the method further comprises:
sending, by the network resource management entity, an ingress address of the multicast/broadcast session to an application layer service entity, wherein the ingress address is for receiving data of the service.

7. The method according to claim 6, wherein the ingress address is carried in a multicast/broadcast session update response message.

8. The method according to any one of claims 2 to 7, wherein the method further comprises:
sending, by the network resource management entity, fifth information to the application layer service entity, wherein the fifth information indicates the application layer service entity to send the data of the service via the multicast/broadcast session.

9. The method according to claim 8, wherein the fifth information is a user plane delivery mode switching message.

10. The method according to any one of claims 2 to 9, wherein the method further comprises:
sending, by the network resource management entity, the ingress address of the multicast/broadcast session to a data delivery enabling service entity, wherein the ingress address is for receiving the data of the service.

11. The method according to claim 1, wherein the MBS device is a network capability exposure function network element, and the sending the third information comprises: sending, by the network capability exposure function network element, the third information to a second multicast/broadcast session management network element, wherein the third information is for requesting to establish the multicast/broadcast session, and there is an intersection set between a service area of the second multicast/broadcast session management network element and the first service area.

12. The method according to claim 11, wherein the method further comprises:
discovering, by the network capability exposure function network element, the second multicast/broadcast session management network element from a network repository function network element based on the information about the first service area.

13. The method according to claim 11 or 12, wherein the method further comprises:
receiving, by the network capability exposure function network element, fourth information from the second multicast/broadcast session management network element, wherein the fourth information indicates that establishment of the multicast/broadcast session succeeds.

14. The method according to claim 13, wherein the third information is the multicast/broadcast session create request message, and the fourth information is the multicast/broadcast session create response message.

15. The method according to any one of claims 11 to 14, wherein the method further comprises:
sending, by the network capability exposure function network element, an ingress address of the multicast/broadcast session to an application network element, wherein the ingress address is for receiving data of the multicast/broadcast session.

16. The method according to claim 15, wherein the ingress address is carried in the multicast/broadcast session create response message.

17. The method according to claim 2, wherein the MBS device is the network resource management entity, and the method further comprises:
receiving, by the network resource management entity, sixth information from the network capability exposure function network element, wherein the sixth information indicates that establishment of the multicast/broadcast session fails; and
sending, by the network resource management entity, seventh information to an application layer service entity based on the sixth information, wherein the seventh information is for triggering establishing a unicast session for the service.

18. The method according to claim 17, wherein the seventh information further indicates that a network covering the first service area does not support multicast/broadcast.

19. The method according to claim 17 or 18, wherein the third information is the multicast/broadcast session create request message, the sixth information is a multicast/broadcast session create response message, and the seventh information is a multicast/broadcast event notification message or a user plane delivery mode switching message.

20. The method according to any one of claims 1 to 19, wherein the first information is a multicast/broadcast session update request message, and the second information is the multicast/broadcast session update response message.

21. The method according to any one of claims 1 to 20, wherein the MBS service area is a second service area before being updated, and the second service area and the first service area satisfy any one of the following relationships: the second service area partially overlaps the first service area, the second service area does not overlap the first service area, or the first service area comprises the second service area.

22. A communication method, wherein the method comprises:
sending, by a network capability exposure function network element, first information to a first multicast/broadcast session management network element, wherein the first information is for requesting to update a multicast/broadcast service MBS service area to a first service area, and the MBS service area is a service area of a service;
receiving, by the network capability exposure function network element, second information from the first multicast/broadcast session management network element, wherein the second information indicates that update of the MBS service area fails;
sending, by the network capability exposure function network element, information about the first service area to a network repository function network element, wherein the information about the first service area is for discovering a multicast/broadcast session management network element that matches the first service area;
receiving, by the network capability exposure function network element, third information from the network repository function network element, wherein the third information indicates that a multicast/broadcast session management network element that matches the first service area is not found; and
sending, by the network capability exposure function network element, fourth information to an application network element, wherein the fourth information is for triggering establishing a unicast session for the service.

23. The method according to claim 22, wherein the first information is a multicast/broadcast session update request message, the second information is a multicast/broadcast session update response message, the third information is a network element discovery response message, and the fourth information is a multicast/broadcast session update response message or a multicast/broadcast event notification message.

24. The method according to claim 22 or 23, wherein the MBS service area is a second service area before being updated, and the second service area and the first service area satisfy any one of the following relationships: the second service area partially overlaps the first service area, the second service area does not overlap the first service area, or the first service area comprises the second service area.

25. A communication apparatus, wherein the apparatus comprises a module configured to perform the method according to any one of claims 1 to 21.

26. A communication apparatus, wherein the apparatus comprises a module configured to perform the method according to any one of claims 22 to 24.

27. A communication apparatus, wherein the communication apparatus comprises a processor and a memory, the memory is configured to store computer instructions, and when the processor executes the instructions, the communication apparatus is caused to perform the method according to any one of claims 1 to 24.

28. A computer-readable storage medium, wherein the computer-readable storage medium comprises a computer program or instructions, and when the computer program or the instructions are run on a computer, the computer is caused to perform the method according to any one of claims 1 to 24.
